# EUROPÄISCHE PATENTSCHRIFT

(11) **EP 3 625 560 B1**
(45) Veröffentlichungstag und Bekanntmachung des Hinweises auf die Patenterteilung: **17.11.2021**
(21) Anmeldenummer: 18726400.7
(22) Anmeldetag: 15.05.2018
(51) Int. Cl.: G01N 30/84, G01N 30/80, B01D 19/00, B01D 15/40, B01D 15/24

(54) **GAS-FLÜSSIG-ABSCHEIDER FÜR EINE CHROMATOGRAPHIE-ANLAGE**
GAS-LIQUID SEPARATOR FOR A CHROMATOGRAPHY SYSTEM
SÉPARATEUR GAZ-LIQUIDE POUR UN SYSTÈME DE CHROMATOGRAPHIE

(30) Priorität: 16.05.2017 DE 102017110601; 06.11.2017 DE 102017125816; 20.12.2017 DE 102017130820
(43) Veröffentlichungstag der Anmeldung: 25.03.2020
(60) Teilanmeldung: 21202259.4
(73) Patentinhaber: Bozic, Alexander, 61440 Oberursel (DE)
(72) Erfinder: Bozic, Alexander, 61440 Oberursel (DE)
(74) Vertreter: Schultheiss & Sterzel Patentanwälte PartG mbB
(86) Internationale Anmeldenummer: PCT/EP2018/062537
(87) Internationale Veröffentlichungsnummer: WO 2018/210818

(56) Entgegenhaltungen:
- EP-A1- 2 463 004
- WO-A1-2014/012962
- WO-A2-2012/040252

## Beschreibung

Die vorliegende Erfindung betrifft einen Gas-Flüssig-Abscheider für eine Chromatographie-Anlage sowie Verfahren zur Trennung von Gas-Flüssiggemischen.

Durch eine überkritische Flüssigkeitschromatographie (SFC, Supercritical Fluid Chromatography) können viele Vorteile erzielt werden, so dass verschiedene Substanzen besonders einfach und zuverlässig getrennt, chemisch analysiert, identifiziert und quantifiziert werden können. Bei Verwendung von Kohlendioxid (CO₂) als Flüssigkeit in SFC-Anwendungen wird die Extraktion der Substanzen im Allgemeinen oberhalb der kritischen Temperatur von 31 ° C und oberhalb eines kritischen Drucks von 74 bar durchgeführt.

Um CO₂ oder ein CO₂-Gemisch in einem flüssigen Zustand innerhalb einer Chromatographiesäule zu halten, muss das gesamte Chromatographiesystem auf einem vorgegebenen Druckniveau gehalten werden. Zu diesem Zweck ist stromabwärts der Chromatographiesäule und stromabwärts eines jeweiligen Detektors typischerweise ein Rückdruckregler vorgesehen, um den Druck innerhalb des Chromatographiesystems auf einem vorgegebenen Niveau zu halten.

In praktischen Anwendungen ist die SFC-Technologie mit dem Nachteil behaftet, dass die mobile Phase der chromatographisch getrennten Substanzen nicht einfach in geöffneten Gefäßen gesammelt werden kann. Sobald ein Gemisch aus flüssigem CO₂ und einem zusätzlichen Lösungsmittel dem atmosphärischen Druck ausgesetzt wird, dehnt sich CO₂ aus und bildet mit dem zusätzlichen Lösungsmittel ein Aerosol. Eine verlustfreie Sammlung des Lösungsmittels erfordert eine ausreichende Gas-Flüssigkeits-Trennung des Aerosols. Gas-Flüssigkeits-Gemische können im Allgemeinen in eine gasförmige und in eine flüssige Komponente unter Verwendung von Trägheitsabscheidern, die nach dem Zyklonprinzip arbeiten, getrennt werden. Dort wird ein Aerosol tangential in ein kegelförmiges Gefäß eingeführt. Das Aerosol breitet sich auf einer kreisförmigen Bahn aus, so dass seine flüssigen Teilchen radial nach außen driften, bis sie auf die Seitenwand des Gefäßes auftreffen. Aufgrund ihrer reduzierten spezifischen Masse erleben gasförmige Bauteile eine geringere Trägheitskraft und können das kegelförmige Gefäß mittels eines zentralen Tauchrohres verlassen.

In einer SFC kann die Zusammensetzung des Aerosols jedoch stark variieren, da vielfach ein Lösungsmittelgradient zur Trennung von Substanzen eingesetzt wird. Die Mischung aus CO₂ und einem zusätzlichen Lösungsmittel, wie Methanol, kann beispielsweise von 10% bis 60% Methanolfraktion variieren. Infolgedessen kann die Konstitution des Aerosols und sein Volumenstrom entsprechend variieren, was zu suboptimalen Trennungsraten von gasförmigen und flüssigen Fraktionen des Aerosols in einem Zyklon-Separator führt.

Andere Gas-Flüssigkeits-Trennsysteme verwenden beispielsweise eine Prallabscheidung, wobei der Volumenstrom des Aerosols auf eine Ablenkplatte gerichtet ist, die gegebenenfalls durch ein Reagenzglas bereitgestellt werden kann. Im Allgemeinen benötigen Prallabscheider und Trägheitsabscheider ein vergleichsweise großes Volumen, in das sich das Aerosol ausdehnen kann. Solche vergleichsweise großen Gefäße sind hinsichtlich der Selbstreinigungseffekte nicht optimal, da eine Kreuzkontamination von Aerosolen und Substanzen auftreten kann, die nacheinander von solchen Separatoren verarbeitet werden. Insbesondere müssen die Laufzeitunterschiede der Substanzen sehr groß sein, um eine ausreichende Trennung sicherzustellen. Grundsätzlich können die Größe und die Oberfläche der Prallabscheider bei Betrieb mit erhöhtem Druckniveau minimiert werden.

Beispielsweise kann ein als Umlenkplatte dienendes Reagenzglas in einer unter Druck stehenden Umgebung vorgesehen sein. Das Aerosol kann dann aus einem gebogenen Auslass entweichen und kann auf die Seitenwand des Reagenzglases in einem vorgegebenen Winkel auftreffen. Mit einem solchen Stoßabscheider ist es in der Tat möglich, kleinere Mengen einer Substanz mit einem viel geringeren Aufwand zu sammeln. Aber Stoßabscheider, die mit einem erhöhten Druckniveau arbeiten, erlauben es nicht, eine große skalierte automatisierte Fraktionierung zu realisieren. Somit sind die Betriebskosten und die Installationskosten vergleichsweise hoch, da nur eine begrenzte Menge an Reagenzgläsern im Druckbereich automatisch verarbeitet werden kann. Darüber hinaus ist die Trenngeschwindigkeit nicht so gut wie bei Abscheidern, die bei atmosphärischem Druck arbeiten.

Ferner sind -Flüssig-Abscheider aus der Druckschrift WO 2014/012962 bekannt.

In Anbetracht des Standes der Technik ist es daher Aufgabe der vorliegenden Erfindung, einen Gas-Flüssig-Abscheider für eine Chromatographie-Anlage bereitzustellen, der die zuvor dargelegten Probleme löst. Hierbei sollte der Gas-Flüssig-Abscheider möglichst einfach und kostengünstig herstellbar sein. Ferner sollte das Volumen des Gas-Flüssig-Abscheiders bezogen auf den Volumenstrom, mit dem die Chromatographie-Anlage betrieben wird, möglichst gering sein.

Ferner war die Bereitstellung eines Gas-Flüssig-Abscheiders, der bei stark unterschiedlichen und variierenden Aerosolzusammensetzungen eine hervorragende Abtrennung der Flüssigkeit aus der Mischung bewirkt, eine Aufgabe der vorliegenden Erfindung. Weiterhin sollte der Gas-Flüssig-Abscheider einfach zu reinigen sein und wartungsarm arbeiten.

Darüber hinaus war es mithin eine Aufgabe der vorliegenden Erfindung einen Gas-Flüssig-Abscheider mit einer besonders hohen Trennleistung zur Verfügung zu stellen. So sollte insbesondere das Gas möglichst vollständig aus der Flüssigkeit entfernt werden können. Fast noch wichtiger ist jedoch, dass möglichst geringe Anteile der Flüssigkeit im Gasstrom verbleiben, der aus dem Gas-Flüssig-Abscheider ausgeleitet wird, um so eine möglichst hohe Ausbeute an der gereinigten Substanzen sicherzustellen. Diese hohe Trennleistung sollte für möglichst unterschiedliche Gas-Flüssigkeitsgemische erzielbar sein.

Eine weitere Aufgabe stellt die Bereitstellung eines Gas-Flüssig-Abscheiders dar, bei dem die durch die Chromatographiesäule getrennt in den Gas-Flüssig-Abscheider eingeleiteten Substanzen nicht durch Kontamination verunreinigt werden. Hierzu sollte der Gas-Flüssig-Abscheider mit möglichst geringem Volumen an Aerosol gespült werden können. Ferner sollten keine Verkrustungen oder Anhaftungen im Gas-Flüssig-Abscheider auftreten, durch die eine nachfolgende Fraktion verunreinigt werden könnte. Insbesondere sollten die zu trennenden Substanzen einen möglichst geringen Laufzeitunterschied aufweisen können, ohne dass hierdurch deren Auftrennung im Gas-Flüssig-Abscheider zunichte gemacht werden würde. Weiterhin sollte bei einem vorgegebenen Laufzeitunterschied eine möglichst hohe Auftrennung der Chargen durch den Gas-Flüssig-Abscheider bewirkt werden.

Eine weitere Aufgabe besteht darin durch einen Gas-Flüssig-Abscheider bereitzustellen, der einen möglichst einfachen Umbau einer bekannten HPLC-Anlage zu einer SFC-Anlage ermöglicht.

Gelöst werden diese sowie weitere nicht explizit genannte Aufgaben, die jedoch aus den hierin einleitend diskutierten Zusammenhängen ohne weiteres ableitbar oder erschließbar sind, durch einen Gas-Flüssig-Abscheider für eine Chromatographie-Anlage mit allen Merkmalen des Patentanspruchs 1.

Gegenstand der vorliegenden Erfindung ist dementsprechend ein Gas-Flüssig-Abscheider für eine Chromatographie-Anlage, umfassend:
a) einen Abscheidebereich mit einer Einlassdüse, einer Pralleinheit und einer Gasleiteinheit;
b) einen Trennbereich mit einem Flüssigauslass und
c) einen Gasausleitbereich mit einem Gasauslass;
wobei der Abscheidebereich mit dem Trennbereich über eine Abscheideöffnung verbunden ist und der Abstand der Einlassdüse von der Pralleinheit größer ist als die kleinste Längenausdehnung der Abscheideöffnung und die Einlassdüse so ausgestaltet ist, dass ein durch die Einlassdüse geleiteter Gas-Flüssigstrom gegen die Pralleinheit beaufschlagbar ist, der dadurch gekennzeichnet ist, dass der Gas-Flüssig- Abscheider mit einer Strömungsrichtung des Gases im Abscheidebereich betreibbar ist, die im Wesentlichen parallel zur Strömungsrichtung der Flüssigkeit ist, wobei der Abscheidebereich keine kreisförmige Querschnittsfläche im Bereich der Einlassdüse aufweist.

Durch die vorliegende Erfindung wird insbesondere bewirkt, dass die Trennleistung des Gas-Flüssig-Abscheiders verbessert wird, wobei insbesondere eine sehr hohe Abtrennung der Flüssigkeit aus dem Aerosol erzielt wird. Ferner kann eine Kontamination der in der Chromatographiesäule getrennten und in den Gas-Flüssig-Abscheider eingeleiteten Substanzen zuverlässig vermieden werden. Insbesondere im Vergleich mit anderen Gas-Flüssig-Abscheidern gelingt eine Verbesserung dahingehend, dass bei einem vorgegebenen Laufzeitunterschied eine sehr hohe Auftrennung der Chargen durch den Gas-Flüssig-Abscheider bewirkt werden kann. Weiterhin kann bei einem relativ geringen Laufzeitunterschied der zu trennenden Substanzen, eine sehr gute Auftrennung im Gas-Flüssig-Abscheider bewirkt werden. Weiterhin kann der Gas-Flüssig-Abscheider sehr kostengünstig und einfach hergestellt werden. Darüber hinaus ist der Gas-Flüssig-Abscheider wartungsarm und kann einfach gereinigt werden.

Ferner kann eine sehr gute Gas-Flüssigkeitsauftrennung auch bei unterschiedlichen Gas-Flüssigkeitszusammensetzungen bewirkt werden. Darüber hinaus kann ein Gas-Flüssig-Abscheider auch bei sehr unterschiedlichen Volumenströmen des Aerosols eingesetzt werden, ohne dass die Auftrennung des Aerosols stark beeinträchtigt werden würde.

Weiterhin ist eine automatisierte Fraktionierung möglich, die entsprechend den Bedürfnissen skaliert werden kann, ohne dass große Investitionen notwendig wären. Ferner können durch den Gas-Flüssigkeits-Separator, die Komplexität und die Kosten der technischen Ausrüstung reduziert werden, die für die Einrichtung der SFC-Analyse erforderlich ist.

Der vorliegenden Erfindung liegt die Erkenntnis zu Grunde, dass eine unerwartete Verbesserung einer Prallabscheidung durch die Anordnung und Ausgestaltung einer Abscheideöffnung erzielt werden kann. Hierdurch kann insbesondere das bei der Prallabscheidung bereitgestellte Gasvolumen vermindert werden, so dass das Gesamtvolumen des Gas-Flüssig-Abscheiders verringert werden kann. Hierdurch kann die zuvor dargelegte Trennleistung verbessert werden.

Der erfindungsgemäße Gas-Flüssig-Abscheider umfasst einen Abscheidebereich mit einer Einlassdüse, einer Pralleinheit und einer Gasleiteinheit.

Vorzugsweise ist der Abscheidebereich so ausgestaltet, dass eine Prallabscheidung bewirkt wird. Prallabscheidung bedeutet, dass sich die im Aerosol befindlichen Flüssigkeitströpfchen gegen eine Pralleinheit geleitet werden, wodurch die Flüssigkeitströpfchen einen Flüssigkeitsfilm bilden können. Hierbei kann das Aerosol in einem direkten Strahl aus der Einlassdüse gezielt auf eine Pralleinheit geleitet werden. Ferner können zwei oder mehr Pralleinheiten in dem Abscheidebereich vorgesehen sein, über eine Gas-Flüssigtrennung des Aerosols zumindest partiell erfolgt. Weiterhin kann das Aerosol über zwei oder mehr Einlassdüsen in den Abscheidebereich eingeleitet werden, wobei eine Umlenkung der jeweiligen Aerosolströme bewirkt werden kann.

Als Pralleinheit kann hierbei jeder Körper dienen, gegen den der Aerosolstrom geleitet werden kann. Beispielsweise kann der Aerosolstrom gegen einen oberen Bereich des Abscheidebereichs geleitet werden, beispielsweise gegen einen oberen Abschluss des Abscheidebereichs. Hierbei kann ein Vorsprung, beispielsweise ein Dorn oder ähnliches vorgesehen sein, auf den der Aerosolstrom beaufschlagt wird, so dass die auf die Pralleinheit geleiteten Flüssigkeitströpfchen nicht zurückgeworfen werden oder von der Pralleinheit zurückprallen, sondern einen Film bilden. Je nach Art der zuvor beschriebenen Einleitung des beziehungsweise der Aerosolströme in den Abscheidebereich kann die Pralleinheit eine mehr oder minder große Fläche innerhalb des Abscheidebereichs einnehmen. Bei einer sehr starken Umlenkung durch die Einleitung von zwei oder mehr Aerosolströmen in den Abscheidebereich kann die gesamte Innenoberfläche des Abscheidebereichs im oberen Bereich desselben als Pralleinheit angesehen werden.

Der vorliegende Gas-Flüssig-Abscheider nutzt im Betrieb die Gravitation, die eine Trennung von Gas und Flüssigkeit bewirkt. Demgemäß bezieht sich der Ausdruck oben auf die Ausrichtung des Gas-Flüssig-Abscheiders, die im Betrieb vorliegt, so dass ein Gas nach oben ausströmen kann, während unten die Gegenrichtung ist, über die eine Flüssigkeit den Gas-Flüssig-Abscheider verlässt.

In einer bevorzugten Ausgestaltung kann vorgesehen sein, dass die Pralleinheit im Wesentlichen eben ist und als Prallplatte angesehen werden kann, wobei diese Prallplatte vorzugsweise eine Wand des Abscheidebereichs bildet und eine Seitenwand der Gasleiteinheit darstellt. Der Ausdruck "im Wesentlichen eben" bedeutet, dass die Pralleinheit beziehungsweise die Prallplatte nicht gebogen ist, jedoch eine Oberflächenstruktur aufweisen kann. In einer spezifischen Ausgestaltung ist die Prallplatte bevorzugt ohne Oberflächenstruktur ausgestaltet, so dass diese Oberfläche glatt ist.

In einer bevorzugt Ausführungsform umfasst die Pralleinheit vorzugsweise eine Oberflächenstruktur, wobei diese Ausführungsform gegenüber einer mit einer glatten Oberfläche bevorzugt ist. Hierbei weist die Oberflächenstruktur vorzugsweise Erhebungen und Senkungen auf, wobei die Erhebungen in Bezug auf die Senkungen vorzugsweise eine Höhe im Bereich von 0,2 bis 10 mm, besonders bevorzugt im Bereich von 0,8 bis 8 mm und speziell bevorzugt im Bereich von 1,5 bis 5 mm zeigen.

Ferner kann vorgesehen sein, dass das Verhältnis von Höhe der Erhebungen (in Bezug auf die Senkungen) zum Volumen des Gas-Flüssig-Abscheiders vorzugsweise im Bereich von 0,01 bis 10 mm/ml, besonders bevorzugt im Bereich von 0,03 bis 5 mm/ml liegt.

In einer weiteren Ausgestaltung weist die Oberflächenstruktur der Pralleinheit Rillen auf, wobei die Erhöhungen und Senkungen der Rillen vorzugsweise in Richtung der ausgerichtet sind, die durch die Einlassdüse und die Abscheideöffnung gebildet wird, oder parallel zu dieser Richtung verlaufen.

Durch eine strukturierte Oberfläche der Pralleinheit, die vorzugsweise als Rillenstruktur ausgebildet ist, kann das Volumen des Gas-Flüssig-Abscheiders besonders klein gehalten und so die Trennleistung verbessert werden. Hierbei können die zu trennenden Substanzen einen relativ geringen Laufzeitunterschied aufweisen, ohne dass hierdurch deren Auftrennung im Gas-Flüssig-Abscheider zunichte gemacht werden würde. Ferner kann der Abscheidegrad der Flüssigkeit aus dem Aerosol in Bezug auf das Volumen des Gas-Flüssig-Abscheiders verbessert werden.

In einer weiteren bevorzugten Ausgestaltung kann vorgesehen sein, dass die Pralleinheit eine Krümmung oder Biegung aufweist, wobei der Krümmungsradius vorzugsweise gering ist. Hierbei ist die Pralleinheit bevorzugt als Teil eines oberen Abschlusses oder als Teil einer Gasbeschleunigungseinheit ausgebildet ist, wie diese später ausführlicher dargelegt werden.

In einer weiteren Fortentwicklung der vorliegenden Erfindung weist die Pralleinheit vorzugsweise einen Oberflächenbereich mit einer Oberflächenenergie von mindestens 10 mN/m, besonders bevorzugt mindestens 15 mN/m und speziell bevorzugt von mindestens 20 mN/m auf. Bevorzugt kann vorgesehen sein, dass die Pralleinheit vorzugsweise einen Oberflächenbereich mit einer Oberflächenenergie im Bereich von 15 bis 120 mN/m, besonders bevorzugt im Bereich von 20 bis 80 mN/m und speziell bevorzugt im Bereich von 22 bis 60 mN/m aufweist, wobei vorzugsweise mindestens 80 %, besonders bevorzugt mindestens 90 % der Oberfläche der Pralleinheit eine Oberflächenenergie im Bereich von 20 bis 80 mN/m, speziell bevorzugt im Bereich von 22 bis 60 mN/m aufweist. Diese Oberflächenenergie kann durch eine entsprechende Materialwahl erzielt werden, aus dem die Pralleinheit hergestellt ist.

Ferner kann die Pralleinheit eine Oberflächenbereich mit einer Beschichtung aufweisen, um die zuvor genannte Oberflächenenergie einzustellen, wobei vorzugsweise mindestens 80 %, besonders bevorzugt mindestens 90 % der Oberfläche der Pralleinheit eine Beschichtung aufweist.

Die Oberflächenenergie wird nach der Methode von Ownes-Wendt-Rabel & Kaelble bestimmt. Hierzu werden Messreihen mit der Standard-Serie nach Busscher durchgeführt, bei der als Testflüssigkeiten Wasser [SFT 72,1 mN/m], Formamid [SFT 56,9 mN/m, Dijodmethan [SFT 50,0 mN/m] und alpha-Bromnaphthalin [SFT 44,4 mN/m] eingesetzt werden. Die Messung wird bei 20°C durchgeführt. Die Oberflächenenergie kann mit einem Kontaktwinkelmesssystem G40 der Fa. Krüss, Hamburg bestimmt werden, wobei die Durchführung im Benutzerhandbuch des Kontaktwinkelmesssystems G40, 1993 beschrieben ist. Hinsichtlich der Berechnungsmethoden sei auf A. W. Neumann, Über die Messmethodik zur Bestimmung grenzflächenenergetischer Größen, Teil I, Zeitschrift für Phys. Chem., Bd. 41, S. 339-352 (1964), und A. W. Neumann, Über die Messmethodik zur Bestimmung grenzflächenenergetischer Größen, Teil II, Zeitschrift für Phys. Chem., Bd. 43, S. 71-83 (1964) verwiesen.

In einer bevorzugten Ausführungsform kann vorgesehen sein, dass der Gasstrom nach dem Auftreffen auf die Pralleinheit auf eine zweite Pralleinheit geleitet wird. Durch diese Ausgestaltung kann überraschend die Trennleistung, insbesondere die Abtrennung der Flüssigkeit aus dem Aerosol verbessert werden. Vorzugsweise kann das Aerosol zunächst auf eine erste Pralleinheit geleitet werden, die beispielsweise von einer Wand des Abscheidebereichs gebildet wird. Nachfolgend kann der Gasstrom auf eine zweite Pralleinheit geleitet werden, die vorzugsweise im oberen Bereich des Abscheidebereichs, besonders bevorzugt im oberen Abschluss des Abscheidebereichs vorgesehen ist.

Ferner kann vorgesehen sein, dass im Abscheidebereich zwei Pralleinheiten vorgesehen sind, wobei die erste Pralleinheit unterhalb der zweiten Pralleinheit angeordnet ist. Hierbei wird der Aerosolstrom zunächst auf die erste Pralleinheit geleitet, die unterhalb der zweiten Pralleinheit angeordnet ist, und anschließend auf die zweite Pralleinheit.

Neben einer Pralleinheit ist im Abscheidebereich des Gas-Flüssig-Abscheiders der vorliegenden Erfindung eine Einlassdüse vorgesehen. Durch die Einlassdüse wird das Aerosol in den Gas-Flüssig-Abscheider, insbesondere in den Abscheidebereich des Gas-Flüssig-Abscheiders geleitet.

Hierbei ist Einlassdüse so ausgestaltet, dass ein durch die Einlassdüse geleiteter Gas-Flüssigstrom gegen die Pralleinheit beaufschlagbar ist, wie dies zuvor bereits im Hinblick auf die Pralleinheit dargelegt wurde.

Die Form und die Art der Einlassdüse sind unkritisch, so dass diese vom Fachmann im Rahmen seiner Fähigkeiten gewählt werden kann. So kann die Einlassdüse beispielsweise so ausgestaltet sein, dass das Aerosol in Form eines sehr engen Strahls auf die Pralleinheit geleitet wird. Ferner kann die Einlassdüse auch so konstruiert ist, dass ein kegelförmiger Spühnebel auf die Pralleinheit geleitet wird.

Hierbei kann die Düse mit der Wandung des Abscheidebereichs abschließen oder über einen Vorsprung in den Abscheidebereich hineinragen. Die Ausführungsform mit einem Vorsprung ist vorteilhaft, falls die Pralleinheit im oberen Abschluss des Abscheidebereichs vorgesehen ist.

Besonders bevorzugt ist die Einlassdüse in Form einer einfachen Bohrung oder einer einfachen Öffnung ausgestaltet. In einer Weiterbildung kann vorgesehen sein, dass die im Abscheidebereich vorgesehene Einlassdüse eine Eintrittsfläche aufweist, die im Wesentlichen kreisförmig ist.

Ferner kann vorgesehen sein, dass die im Abscheidebereich vorgesehene Einlassdüse eine Eintrittsfläche im Bereich von 0,05 mm² bis 20 mm², bevorzugt im Bereich von 0,5 mm² bis 15 mm² , besonders bevorzugt im Bereich von 0,5 mm² bis 10 mm² und speziell bevorzugt im Bereich von 0,8 mm² bis 5 mm² aufweist. In einer weiteren Ausführungsform kann vorgesehen sein, dass die im Abscheidebereich vorgesehene Einlassdüse eine Eintrittsfläche im Bereich von 2 mm² bis 40 mm², bevorzugt im Bereich von 4 mm² bis 20 mm² und speziell bevorzugt im Bereich von 5 mm² bis 15 mm² aufweist. Dieser Wert bezieht sich auf die Größe einer einzelnen Eintrittsdüse, falls mehrere Eintrittsdüsen eingesetzt werden.

Falls die Einlassdüse in Form einer Bohrung ausgebildet ist, so weist diese vorzugsweise einen Durchmesser im Bereich von 0,3 mm bis 5 mm, bevorzugt 0,5 mm bis 4 mm, besonders bevorzugt 0,8 mm bis 3 mm, besonders bevorzugt 1 mm bis 2 mm und/oder speziell bevorzugt 2 bis 3 mm auf. Dieser Wert bezieht sich auf die Größe einer einzelnen Eintrittsdüse, falls mehrere Eintrittsdüsen eingesetzt werden.

Ferner kann vorgesehen sein, dass das Verhältnis der Eintrittsfläche der im Abscheidebereich vorgesehenen Einlassdüse zum Volumen des Gas-Flüssig-Abscheider im Bereich von 0,01 mm²/ml bis 1 mm²/ml, bevorzugt im Bereich von 0,04 mm²/ml bis 0,4 mm²/ml, besonders bevorzugt im Bereich von 0,08 mm²/ml bis 0,25 mm²/ml und speziell bevorzugt im Bereich von 0,08 mm²/ml bis 0,17 mm²/ml liegt. Dieser Wert bezieht sich auf die Summe der Flächen aller eingesetzten Eintrittsdüsen, falls mehrere Eintrittsdüsen eingesetzt werden.

Ferner kann vorgesehen sein, dass das Verhältnis der Eintrittsfläche der im Abscheidebereich vorgesehenen Einlassdüse zum Volumen des Abscheidebereichs im Bereich von 1:3 mm²/ml bis 1:50 mm²/ml, bevorzugt im Bereich von 1:5 mm²/ml bis 1:20 mm²/ml und speziell bevorzugt im Bereich von 1:7 mm²/ml bis 1:15 mm²/ml liegt. In einer weiteren Ausführungsform kann vorgesehen sein, dass das Verhältnis der Eintrittsfläche der im Abscheidebereich vorgesehenen Einlassdüse zum Volumen des Abscheidebereichs im Bereich von 4:1 mm²/ml bis 1:50 mm²/ml, bevorzugt im Bereich von 1:1 mm²/ml bis 1:20 mm²/ml und speziell bevorzugt im Bereich von 2:3 mm²/ml bis 1:5 mm²/ml liegt. Dieser Wert bezieht sich auf die Summe der Flächen aller eingesetzten Eintrittsdüsen, falls mehrere Eintrittsdüsen eingesetzt werden.

Im Abscheidebereich können eine oder mehrere Einlassdüsen vorgesehen sein. Für den Fall, dass mehrere Einlassdüsen vorgesehen sind, sind diese bevorzugt parallel ausgerichtet. Bevorzugt wird das Gas-Aerosolgemisch über genau eine Einlassdüse in den Abscheidebereich geleitet, bevorzugt auf die sich im Abscheidebereich befindliche Pralleinheit.

In einer weiteren bevorzugten Ausführungsform umfasst der Abscheidebereich zwei oder mehr Einlassdüsen, wobei diese Einlassdüsen bevorzugt so angeordnet sind, dass die Strömung des Gas-Aerosolgemisches gegen verschiedene Teile einer Pralleinheit oder gegen verschiedene Pralleinheiten geleitet werden. Bevorzugt sind die zwei oder mehr Einlassdüsen so ausgestaltet, dass die durch zwei oder mehr Einlassdüsen geleiteten Gas-Flüssigströme aufeinander zu gerichtet sind, so dass diese sich ohne die Pralleinheit zumindest teilweise treffen würden. Demgemäß ist die Pralleinheit beziehungsweise sind die Pralleinheiten in dieser bevorzugten Ausführungsform mit zwei oder mehr Einlassdüsen vorzugsweise zwischen den zwei oder mehr Einlassdüsen angeordnet.

In einer weiteren bevorzugten Ausführungsform umfasst der Abscheidebereich zwei oder mehr Einlassdüsen, wobei diese Einlassdüsen bevorzugt so angeordnet sind, dass die Strömungsgeschwindigkeit des Gas-Aerosolgemisches im oberen Bereich des Abscheidebereichs vermindert wird. Demgemäß kann bevorzugt vorgesehen sein, dass die durch zwei oder mehr Einlassdüsen geleiteten Gas-Flüssigströme aufeinander zu gerichtet sind. In dieser bevorzugten Ausführungsform bilden bevorzugt beispielsweise Teile der Seitenwände des Abscheidebereichs die jeweiligen Pralleinheiten. Durch diese Ausgestaltung kann überraschend die Trennleistung, insbesondere die Abtrennung der Flüssigkeit aus dem Aerosol verbessert werden. Hierbei können die zwei oder mehr Einlassdüsen, so angeordnet sein, dass eine maximale Abschwächung der jeweiligen Gasströme erreicht wird. Ferner kann vorgesehen sein, dass die zwei oder mehr Einlassdüsen aufeinander zu gerichtet sind, jedoch die jeweiligen Gas- Flüssigströme leicht zueinander versetzt sind, so dass die jeweiligen Gasströme zwar abgeschwächt werden, diese Abschwächung der jeweiligen Gasströme jedoch nicht maximal ist. Die Abschwächung der jeweiligen Gasströme bemisst sich hierbei nach dem ursprünglichen Geschwindigkeitsvektor des jeweiligen Gasstroms, der die ursprüngliche Richtung des Gasstroms umfasst.

Ferner kann vorgesehen sein, dass die Einlassdüse so ausgestaltet ist, dass ein durch den Einlass geleiteter Gas-Flüssigstrom gegen die Pralleinheit beaufschlagbar ist und der Winkel mit dem ein durch der Einlassdüse geleiteter Gas-Flüssigstrom auf die Pralleinheit beaufschlagbar ist, vorzugsweise im Bereich von 50 bis 130 °, besonders bevorzugt im Bereich von 70 bis 110° liegt. Dieser Winkel kann insbesondere durch die Richtung der Einlassdüse bestimmt werden, mit dem die Einlassdüse auf die Pralleinheit gerichtet ist. Diese Angaben beziehen sich auf den Winkel mit dem der Hauptstrahl des Aerosols auf die Pralleinheit geleitet wird. Die Form des Aerosolstrahls ist an sich unwesentlich, soweit eine Prallabscheidung bewirkt werden kann. Hierbei sollten die Flüssigkeitströpfchen des Aerosols durch den Stoß auf die Pralleinheit zusammenfließen und vorzugsweise einen Film bilden. Daher sollte die Einlassdüse so gewählt werden, dass die Flüssigkeitströpfchen des Aerosols nicht zu klein werden.

In einer bevorzugten Ausführungsform sind im Abscheidebereich zwei Pralleinheiten vorgesehen, wobei die Einlassdüse den Gasstrom zunächst auf die erste Pralleinheit leitet, wie dies zuvor bereits dargelegt wurde. Zum Überführen des Gasstroms auf die zweite Pralleinheit kann jede bekannte Einrichtung eingesetzt werden. Beispielsweise kann eine Umlenkung an der ersten Pralleinheit durch einen entsprechenden Winkel und/oder eine entsprechende Form der ersten Pralleinheit erzielt werden. In einer bevorzugten Ausgestaltung kann vorgesehen sein, dass eine Umleiteinheit vorgesehen ist, über die der Aerosolstrom auf die zweite Pralleinheit geleitet wird. Die Umleiteinheit weist vorzugsweise mindestens drei Begrenzungsflächen auf, so dass der Gasstrom von dem Einlass der Einlassdüse über eine Ausleitöffnung auf die zweite Pralleinheit geleitet wird. Demgemäß stellt die Umleiteinheit bevorzugt eine Aussparung dar, deren Boden U oder V-fömig sein kann und zwei gegenüberliegende Seitenflächen und eine Stirnfläche, die vorzugsweise als erste Pralleinheit dient, aufweist, so dass zwischen Einlass der Einlassdüse und der ersten Pralleinheit ein Raum definiert ist. Bevorzugt leitet die Einlassdüse den Aerosol- beziehungsweise Gasstrom parallel zum Boden der Aussparung, so dass dieser auf die als erste Pralleinheit ausgebildete Stirnfläche trifft. Durch die Ausleitöffnung der Aussparung beziehungsweise der Umleiteinheit wird der Aerosolstrom anschließend auf die zweite Pralleinheit geleitet. In einer bevorzugten Ausgestaltung wird der Gasstrom bei der Umleitung nach oben, bevorzugt in einem Winkel, der vorzugsweise im Bereich von 50 bis 130 °, besonders bevorzugt im Bereich von 70 bis 110° liegt, geleitet, bezogen auf die Richtung des Aerosolstroms, der von der Einlassdüse auf die erste Pralleinheit geleitet wird. Durch diese Ausführungsform wird die Strömungsgeschwindigkeit des Aerosolstroms vorzugsweise abgebremst, wobei der von der ersten Pralleinheit, vorzugsweise der Stirnfläche der Umleiteinheit, bevorzugt der Aussparung zurückgeworfene Gasstrom zunächst gegen den Aerosolstrom gerichtet ist, der von der Einlassdüse in die Umlenkeinheit, bevorzugt die Aussparung eingeleitet wird.

Ferner kann vorgesehen sein, dass die im Abscheidebereich bevorzugt vorgesehene Ausleitöffnung der Umleiteinheit beziehungsweise der Aussparung eine Austrittsfläche im Bereich von 0,1 mm² bis 60 mm², bevorzugt im Bereich von 1,5 mm² bis 40 mm² und speziell bevorzugt im Bereich von 3 mm² bis 20 mm² aufweist.

Vorzugsweise kann vorgesehen sein, dass die Austrittsfläche der Ausleitöffnung der Umleiteinheit beziehungsweise der Aussparung mindestens so groß ist wie die Eintrittsfläche Einlassdüse. Vorzugsweise liegt das Flächenverhältnis der im Abscheidebereich bevorzugt vorgesehene Ausleitöffnung der Umleiteinheit beziehungsweise der Aussparung zur Eintrittsfläche der im Abscheidebereich vorgesehenen Einlassdüse im Bereich von 20:1 bis 1:1, bevorzugt im Bereich von 15:1 bis 3:2 und speziell bevorzugt im Bereich von 5:1 bis 2:1.

Ferner kann vorgesehen sein, dass die im Abscheidebereich bevorzugt vorgesehene Umleiteinheit beziehungsweise Aussparung eine Breite im Bereich von 0,3 mm bis 8 mm, bevorzugt 0,8 mm bis 5 mm und besonders bevorzugt 1,5 mm bis 4 mm aufweist. Die Breite der Umleiteinheit beziehungsweise Aussparung bezeichnet den maximalen Abstand der mindestens zwei gegenüberliegenden Seitenflächen.

Weiterhin kann vorgesehen sein, dass die im Abscheidebereich bevorzugt vorgesehene Umleiteinheit beziehungsweise Aussparung eine Länge im Bereich von 1 mm bis 60 mm, bevorzugt 5 mm bis 40 mm und besonders bevorzugt 10 mm bis 30 mm aufweist. Die Länge der Umleiteinheit beziehungsweise Aussparung bezeichnet den Abstand zwischen der als Pralleinheit ausgebildeten Fläche und der Einlassdüse.

Darüber hinaus kann vorgesehen sein, dass die im Abscheidebereich bevorzugt vorgesehene Umleiteinheit beziehungsweise Aussparung eine Höhe im Bereich von 0,5 mm bis 40 mm, bevorzugt 1,5 mm bis 30 mm und besonders bevorzugt 5 mm bis 20 mm aufweist. Die Höhe der Umleiteinheit beziehungsweise Aussparung bezeichnet den Abstand zwischen Boden und Ausleitöffnung der Umleiteinheit beziehungsweise der Aussparung.

Der Gas-Flüssig-Abscheider weist eine Abscheideöffnung auf, die zwischen Abscheidebereich und Trennbereich angeordnet ist, so dass eine gas- und flüssigkeitsoffene Verbindung zwischen diesen Bereichen besteht. Durch die Abscheideöffnung wird vorzugsweise eine Trägheitsabscheidung bewirkt. Dies bedeutet, dass die an der Pralleinheit und/oder der Gasleiteinheit in Form eines Flüssigkeitsfilms nach unten laufende Flüssigkeit von dem Gas durch Trägheit abschieden wird. Hierbei beschleunigt das Gas vorzugsweise die Flüssigkeit, so dass die Flüssigkeit mit einer höheren Geschwindigkeit in den Trennbereich überführt wird, als ohne diese Gasbeschleunigung. Hierbei verbleibt der Flüssigkeitsfilm vorzugsweise an einer Wand des Abscheidebereichs, die vorzugsweise als Teil der Pralleinheit und/oder der Gasleiteinheit ausgestaltet ist, in Form eines Films und geht unmittelbar in den Trennbereich über, ohne dass der Flüssigkeitsfilm diese Wand, die in den Trennbereich übergeht, verlässt. Die Gasphase haftet im Gegensatz zur Flüssigphase nicht an einer Wand, sondern ist in der Lage nach oben auszutreten und in den Gasausleitbereich überzugehen. Im Gegensatz hierzu wird die Flüssigkeit in den Trennbereich abgeleitet und über den Flüssigauslass, der im Trennbereich vorgesehen ist, dem Gas-Flüssig-Abscheider entnommen.

Die Form der Abscheideöffnung ist nicht kritisch soweit die zuvor dargelegte Funktion derselben erfüllt werden kann. Vorzugsweise kann jedoch vorgesehen sein, dass die Abscheideöffnung eine Austrittsfläche aufweist, die spaltförmig ist oder mehrere parallel angeordnete Öffnungen, die beispielsweise U-förmige, V-förmige oder kreisförmig sein können, aufweist.

Erfindungsgemäß ist der Abstand der Einlassdüse von der Pralleinheit größer als die kleinste Längenausdehnung der Abscheideöffnung. Hierbei ergibt sich der Abstand der Einlassdüse von der Pralleinheit aus dem Weg des Aerosols vom Verlassen der Einlassdüse bis zum Auftreffen auf die Pralleinheit. Die kleinste Längenausdehnung der Abscheideöffnung bezieht sich auf die Breite oder Länge der Abscheideöffnung, wobei sich die Ausdehnung der Ebene bis zum Rand der Abscheideöffnung auf die Ebene zwischen Abscheidebereich und Trennbereich bezogen wird, die zu einer minimalen Fläche der Abscheideöffnung führt. In dieser Ebene, in der die Abscheideöffnung liegt, wird die Länge der längsten Ausdehnung der Abscheideöffnung bestimmt, so dass anschließend die kürzeste Länge der Abscheideöffnung gemessen werden kann, die senkrecht zur längsten Ausdehnung der Abscheideöffnung liegt. Diese kleinste Längenausdehnung kann hierin auch als Breite der Abscheideöffnung angesehen werden.

Falls die Abscheideöffnung spaltförmig ist, weist diese vorzugsweise eine Spaltbreite im Bereich von 0,1 mm bis 1,5 mm, besonders bevorzugt 0,3 mm bis 1,0 mm und speziell bevorzugt 0,4 mm bis 0,7 mm auf (kleinste Längenausdehnung). Die Länge des Spaltes ist bei einer kreisförmigen oder elliptischen Abscheideöffnung durch den Umfang gegeben, wobei diese Werte vorzugsweise im Bereich von 5 mm bis 120 mm, besonders bevorzugt im Bereich von 10 mm bis 60 mm liegen können.

Falls die Abscheideöffnung spaltförmig ist, weist diese in einer weiteren Ausführunsform vorzugsweise eine Spaltbreite im Bereich von 0,1 mm bis 3,0 mm, besonders bevorzugt 0,3 mm bis 2,0 mm und speziell bevorzugt 0,4 mm bis 1,5 mm auf (kleinste Längenausdehnung). Die Länge des Spaltes ist bei einer kreisförmigen oder elliptischen Abscheideöffnung durch den Umfang gegeben, wobei diese Werte in einer weiteren Ausführungsform vorzugsweise im Bereich von 5 mm bis 150 mm, besonders bevorzugt im Bereich von 10 mm bis 80 mm liegen können.

Bei einer nicht-kreisförmigen oder nicht-elliptischen Abscheideöffnung mit einer Spaltform, die vorzugsweise durch zwei Enden gekennzeichnet ist, liegt deren Länge vorzugsweise im Bereich von 3 bis 80 mm, bevorzugt im Bereich von 5 bis 50 mm besonders bevorzugt im Bereich von 15 bis 30 mm.

Falls die Abscheideöffnung durch mehrere parallel angeordnete Öffnungen realisiert ist, die beispielsweise U-förmige, V-förmige oder kreisförmig sein können, so gelten die zuvor dargelegten Maße entsprechend, wobei die Öffnungen vorzugsweise eine Breite im Bereich von 0,1 mm bis 1,5 mm, besonders bevorzugt 0,3 mm bis 1,0 mm und speziell bevorzugt 0,4 mm bis 0,7 mm aufweisen (kleinste Längenausdehnung). In einer weiteren Ausführungsform kann können die Öffnungen vorzugsweise eine Breite im Bereich von 0,1 mm bis 3,0 mm, besonders bevorzugt 0,3 mm bis 2,0 mm und speziell bevorzugt 0,4 mm bis 1,5 mm aufweisen (kleinste Längenausdehnung).

Die Spaltbreite wird senkrecht zur Länge oder dem Umfang des Spaltes gemessen und ist die kleinere Längenausdehnung der Spaltöffnung, die als Übergangsebene von dem Abscheidebereich in den Trennbereich angesehen werden kann. Diese Übergangsebene weist im Bereich des Übergangs von dem Abscheidebereich in den Trennbereich die kleinste zweidimensionale Ausdehnung auf.

Bevorzugt weist die Abscheideöffnung eine Austrittsfläche im Bereich von 10 bis 120 mm², besonders bevorzugt im Bereich von 15 bis 60 mm² und speziell bevorzugt im Bereich von 15 bis 40 mm² auf. In einer weiteren Ausführungsform kann die Abscheideöffnung eine Austrittsfläche im Bereich von 10 bis 180 mm², besonders bevorzugt im Bereich von 15 bis 120 mm² und speziell bevorzugt im Bereich von 30 bis 100 mm² aufweisen. Ferner kann vorgesehen sein, dass das Verhältnis der Austrittsfläche der Abscheideöffnung zum Volumen des Gas-Flüssig-Abscheider im Bereich von 0,05 mm²/ml bis 2 mm²/ml, besonders bevorzugt im Bereich von 0,1 mm²/ml bis 1 mm²/ml und speziell bevorzugt im Bereich von 0,3 mm²/ml bis 0,8 mm²/ml liegt. In einer weiteren Ausführungsform kann vorgesehen sein, dass das Verhältnis der Austrittsfläche der Abscheideöffnung zum Volumen des Gas-Flüssig-Abscheider im Bereich von 0,05 mm²/ml bis 6 mm²/ml, besonders bevorzugt im Bereich von 0,3 mm²/ml bis 3 mm²/ml und speziell bevorzugt im Bereich von 0,5 mm²/ml bis 2,0 mm²/ml liegt.

Die räumliche Form des Abscheidebereichs ist nicht kritisch und kann den Bedürfnissen angepasst werden. Hierbei ist wesentlich, dass im Abscheidebereich eine Gasleiteinheit gebildet wird. Die Gasleiteinheit bewirkt eine Veränderung der Strömungsgeschwindigkeit eines Gases, so dass im Bereich der Einlassdüse eine geringere Gasgeschwindigkeit vorliegt als im Bereich der Abscheideöffnung. Da der Volumenstrom bei gleicher Aerosolzusammensetzung als konstant angesehen werden kann, bedeutet dies, dass dem Aerosol zunächst in einen relativ großen Raum geleitet wird, der anschließend verengt wird, so dass die Strömungsgeschwindigkeit zunimmt.

Im Bereich der Einlassdüse weist der Abscheidebereich keine kreisförmige Querschnittsfläche auf, wobei der Abscheidebereich vorzugsweise mindestens drei Seitenwände umfasst, die zusammen mit einem oberen Abschluss einen Raum definieren, der über die Abscheideöffnung mit dem Trennbereich verbunden ist. Diese Ausführungsform, in der der Abscheidebereich keine kreisförmige Querschnittsfläche umfasst, sondern eine Querschnittsfläche mit Ecken, insbesondere eine dreieckige, viereckige, fünfeckige oder sechseckige Querschnittsfläche, besonders bevorzugt eine rechteckige, ist leichter in einer geforderten Präzision herzustellen, wobei das Volumen des Gas-Flüssig-Abscheider besser an die Anforderungen angepasst werden kann. Insbesondere können auch Gas-Flüssig-Abscheider bereitgestellt werden, die für besonders kleine Volumenströme geeignet sind. Im Gegensatz zu Gas-Flüssig-Abscheider mit einer kreisförmigen Querschnittsfläche können Gas-Flüssig-Abscheider mit einer nicht-kreisförmigen, vorzugsweise eine Querschnittsfläche mit Ecken, genau eine Einlassdüse aufweisen, ohne dass Bereiche einer unzureichenden Benetzung mit Gas-Flüssigkeitsgemisch auftreten würde.

Vorzugsweise kann vorgesehen sein, dass die Gasleiteinheit mindestens zwei im Wesentlichen ebene Seitenwände aufweist, die als Gasleitplatten angesehen werden können, wobei diese Gasleitplatten vorzugsweise Wände des Abscheidebereichs bilden. Diese zwei im Wesentlichen ebenen Seitenwände können aufeinander zulaufen, so dass eine Keilform gebildet wird.

Ferner kann vorgesehen sein, dass die Gasleiteinheit mindestens zwei Seitenwände aufweist, wobei mindestens eine der Seitenwände gebogen ist, so dass eine konkave Form dergestalt vorgesehen ist, dass die die beiden Seitenwände können aufeinander zulaufen, wobei die im oberen Bereich des Abscheidebereichs, der durch die Nähe der Einlassdüse gegeben ist, der Abstand zwischen den Seitenwände größer ist als im unteren Bereich des Abscheidebereichs, der durch die Nähe der Abscheideöffnung gegeben ist, wobei die Abnahme des Abstands von Richtung oberen Bereich zum unteren Bereich abnimmt.

Vorzugsweise kann vorgesehen sein, dass die Gasleiteinheit eine Gasbeschleunigungseinheit aufweist, die zusammen mit mindestens einer Seitenwand, vorzugsweise mindestens zwei Seitenwänden eine Veränderung der Strömungsgeschwindigkeit eines Gases bewirkt.

In einer weiteren Ausgestaltung kann vorgesehen sein, dass die Querschnittsfläche der Gasleiteinheit von Einlassdüse in Richtung Abscheideöffnung zumindest bereichsweise, vorzugsweise in dem zur Abscheideöffnung hingewandten Bereich abnimmt, so dass die Ebenen, die senkrecht zur Flussrichtung des Gas-Flüssiggemisches stehen, kleiner werden, wobei diese Abnahme vorzugsweise stetig ist, so dass vorzugsweise mindestens zwei der Seitenwände der Gasleiteinheit im Längsschnitt eine Keilform bilden.

In einer weiteren Ausgestaltung kann vorgesehen sein, dass der Abscheidebereich einen oberen Abschluss umfasst, wobei dieser obere Abschluss eine Krümmung oder einen Winkel umfasst, wobei der höchste Punkt der Krümmung oder der Winkel vorzugsweise mittig angeordnet ist, und so auf einer Linie mit der Einlassdüse liegt, die parallel zur Gasflussrichtung beziehungsweise der Flussrichtung der Flüssigkeit, also parallel zur Richtung von Gaseinlass- Flüssigauslass-Öffnung gedacht werden, wobei der obere Abschluss vorzugsweise in zwei Seitenwände übergeht, so dass der Übergang zwischen den Seitenwänden und dem oberen Abschluss gekrümmt ist.

In einer bevorzugten Ausführungsform sind im Abscheidebereich zwei Pralleinheiten vorgesehen, wobei die Einlassdüse den Gasstrom zunächst auf die erste Pralleinheit leitet, wie dies zuvor bereits dargelegt wurde. In einer bevorzugten Ausführungsform kann hierbei vorgesehen sein, dass die zweite Pralleinheit im Bereich des oberen Abschlusses vorgesehen ist. Bevorzugt wird demgemäß das Aerosol durch eine Umleiteinheit von der ersten Pralleinheit auf die im oberen Abschluss angeordnete zweite Pralleinheit geleitet.

In einer weiteren Fortbildung der vorliegenden Erfindung kann vorgesehen sein, dass der Abscheidebereich mindestens vier Seitenwände umfasst, die zusammen mit einem oberen Abschluss, einen Raum definieren, der die Gasleiteinheit bildet, wobei eine der Seitenwände als Pralleinheit ausgebildet ist, wobei dieser Raum über die Abscheideöffnung mit dem Trennbereich verbunden ist. In dieser Ausführungsform, in der Abscheidebereich mindestens vier Seitenwände umfasst, die zusammen mit einem oberen Abschluss, einen Raum definieren, kann bevorzugt vorgesehen sein, dass der Abstand zwischen zwei gegenüberliegenden Seitenwänden größer ist als der halbe Abstand der Einlassdüse von der Pralleinheit. Bevorzugt kann in dieser Ausführungsform, in der Abscheidebereich mindestens vier Seitenwände umfasst, die zusammen mit einem oberen Abschluss, einen Raum definieren, vorgesehen sein, das Verhältnis des Abstandes zwischen zwei gegenüberliegenden Seitenwänden zu Abstand der Einlassdüse von der Pralleinheit im Bereich von 0,8 bis 8, besonders bevorzugt im Bereich von 0,9 bis 6, speziell bevorzugt im Bereich von 1,0 bis 4 und besonders bevorzugt im Bereich von 1,2 bis 2 liegt. Diese Werte beziehen sich insbesondere auf zwei gegenüberliegende Seitenwände die den größten Abstand aufweisen.

In einer weiteren Fortbildung der vorliegenden Erfindung kann vorgesehen sein, dass der Abscheidebereich mindestens zwei, vorzugsweise mindestens drei Seitenwände umfasst, die zusammen mit einem oberen Abschluss und einer Gasbeschleunigungseinheit, einen Raum definieren, der die Gasleiteinheit bildet, wobei eine der Seitenwände, die Gasbeschleunigungseinheit oder der obere Abschluss als Pralleinheit ausgebildet ist, wobei dieser Raum über die Abscheideöffnung mit dem Trennbereich verbunden ist. In dieser Ausführungsform, in der Abscheidebereich mindestens zwei Seitenwände und eine Gasbeschleunigungseinheit umfasst, die zusammen mit einem oberen Abschluss, einen Raum definieren, kann bevorzugt vorgesehen sein, dass der Abstand zwischen zwei gegenüberliegenden Seitenwänden größer ist als der halbe Abstand der Einlassdüse von der Pralleinheit. Bevorzugt kann in dieser Ausführungsform, in der Abscheidebereich mindestens zwei Seitenwände und eine Gasbeschleunigungseinheit umfasst, die zusammen mit einem oberen Abschluss, einen Raum definieren, vorgesehen sein, das Verhältnis des Abstandes zwischen zwei gegenüberliegenden Seitenwänden zu Abstand der Einlassdüse von der Pralleinheit im Bereich von 0,8 bis 8, besonders bevorzugt im Bereich von 0,9 bis 6, speziell bevorzugt im Bereich von 1,0 bis 4 und besonders bevorzugt im Bereich von 1,2 bis 2 liegt. Diese Werte beziehen sich insbesondere auf zwei gegenüberliegende Seitenwände die den größten Abstand aufweisen.

Ferner kann vorgesehen sein, dass die Einlassdüse im oberen Bereich des Abscheidebereichs vorgesehen ist, besonders bevorzugt im oberen Drittel des Abscheidebereichs, wobei sich diese Richtung aus der Anordnung des Einlasses und des Flüssigauslasses ergibt, so dass die Einlassdüse oberhalb des Flüssigauslasses angeordnet ist.

Neben dem zuvor dargelegten Abscheidebereich weist ein erfindungsgemäßer Gas-Flüssig-Abscheider einen Trennbereich auf. Im Trennbereich werden, wie bereits zuvor angedeutet, die Phasen getrennt, wobei der Trennbereich einen Flüssigauslass aufweist, über den die flüssige Phase dem Gas-Flüssig-Abscheider entnehmbar ist. Die Gasphase wird in den Gasausleitbereich geleitet. Demgemäß ist der Trennbereich über eine Öffnung mit dem Gasausleitbereich verbunden und steht mit diesem in Fließkontakt.

Bevorzugt kann vorgesehen sein, dass der Trennbereich mit einem Flüssigauslass einen Boden umfasst, der vorzugsweise eine Krümmung, einen Bogen einen Winkel oder eine andere Form umfasst, die zu einer Verjüngung führt, wobei der Flüssigauslass im Bereich der tiefsten Stelle des Bodens vorgesehen ist.

Ferner kann vorgesehen sein, dass der Flüssigauslass im unteren Bereich des Trennbereichs vorgesehen ist, besonders bevorzugt im unteren Drittel des Trennbereichs, wobei sich diese Richtung aus der Anordnung der Einlassdüse und des Flüssigauslasses ergibt, so dass die Einlassdüse oberhalb des Flüssigauslasses angeordnet ist.

In einer weiteren Ausführungsform kann vorgesehen sein, dass die Innenoberfläche des Trennbereichs einen Oberflächenbereich mit einer Oberflächenenergie im Bereich von 15 bis 120 mN/m, besonders bevorzugt im Bereich von 20 bis 80 mN/m und speziell bevorzugt im Bereich von 22 bis 60 mN/m aufweist, wobei vorzugsweise mindestens 80 %, besonders bevorzugt mindestens 90 % der Oberfläche des Trennbereichs eine Oberflächenenergie im Bereich von 20 bis 80 mN/m, speziell bevorzugt im Bereich von 22 bis 60 mN/m aufweist. Vorzugsweise kann die Differenz der Oberflächenenergie der Innenoberfläche des Trennbereichs zur Oberflächenenergie der Innenoberfläche des Abscheidebereichs mindestens 10mN/m, bevorzugt mindestens 30mN/m betragen, wobei sich diese Werte auf das jeweilige Maxima oder Minima beziehen, so dass die Differenz maximal ist.

Ferner kann vorgesehen sein, dass der Abscheidebereich eine Querschnittsfläche im Bereich der Einlassdüse aufweist, die mindestens 80 %, vorzugsweise mindestens 90 % der maximalen Querschnittsfläche des Trennbereichs beträgt, wobei die Querschnittsflächen auf die Ebenen bezogen sind, die senkrecht zur Pralleinheit und senkrecht zur Richtung des Hauptauftreffpunktes des Gas-Flüssiggemisches stehen. Der Gasausleitbereich dient zur Ableitung der Gasphase aus dem Gas-Flüssig-Abscheider, so dass dieser einen Gasauslass umfasst.

Vorzugsweise ist der Gasausleitbereich so ausgestaltet, dass die Gasgeschwindigkeit am Gasauslass maximal ist, vorzugsweise die Gasgeschwindigkeit in Gasflussrichtung vom Trennbereich in Richtung Gasauslass gesehen, zunimmt. Hierdurch kann ein Saugeffekt erzeugt werden, der zu einem sicheren und wartungsarmen Betrieb des Gas-Flüssig-Abscheiders führt. Ferner kann hierdurch das Volumen des Gas-Flüssig-Abscheiders verringert werden, ohne dass dessen Leistungsfähigkeit in anderen Eigenschaften, beispielsweise die Trenneigenschaften abnimmt.

In Umkehrung des Abscheidebereichs nimmt daher der Raum von Richtung Trennbereich hin zum Gasauslass ab. Vorzugsweise verjüngt sich demgemäß die Querschnittsfläche von Richtung Trennbereich hin zum Gasauslass.

In einer Fortbildung des Gas-Flüssig-Abscheiders kann vorgesehen sein, dass der Gasausleitbereich so ausgestaltet ist, dass die Fläche von gedachten Ebenen, die senkrecht zur Richtung von Trennbereich zum Gasauslass stehen, ausgehend von dem Trennbereich in Richtung Gasauslass abnimmt, wobei diese Abnahme vorzugsweise stetig ist, wobei vorzugsweise die Gasleiteinheit eine Seitenwand des Gasausleitbereichs und im Längsschnitt diese Seite der Gasleiteinheit mit einer weiteren Seitenwand des Gasausleitbereichs eine Keilform bildet.

Ferner kann vorgesehen sein, dass der Gasauslass im oberen Bereich des Gasausleitbereichs vorgesehen ist, besonders bevorzugt im oberen Drittel des Gasausleitbereichs, wobei sich diese Richtung aus der Anordnung der Einlassdüse und des Flüssigauslasses ergibt, so dass die Einlassdüse oberhalb des Flüssigauslasses angeordnet ist.

Weiterhin kann vorgesehen sein, dass die Innenoberfläche des Gasausleitbereichs einen Oberflächenbereich mit einer Oberflächenenergie im Bereich von 10 bis 40 mN/m aufweist, wobei vorzugsweise mindestens 80 %, besonders bevorzugt mindestens 90 % der Oberfläche des Gasausleitbereichs eine Oberflächenenergie im Bereich von 10 bis 30mN/m aufweist.

Darüber hinaus kann vorgesehen sein, dass der Abscheidebereich oberhalb des Trennbereichs angeordnet ist und der Gasausleitbereich oberhalb des Trennbereichs angeordnet ist, wobei sich diese Richtung aus der Anordnung der Einlassdüse und des Flüssigauslasses ergibt, so dass die Einlassdüse oberhalb des Flüssigauslasses angeordnet ist.

Ferner kann vorgesehen sein, dass der Abscheidebereich oberhalb des Trennbereichs angeordnet ist und der Gasausleitbereich oberhalb des Trennbereichs angeordnet ist, wobei sich diese Richtung aus der Anordnung der Einlassdüse und des Flüssigauslasses ergibt, so dass die Einlassdüse oberhalb des Flüssigauslasses angeordnet ist.

Weiterhin kann vorgesehen sein, dass das Volumenverhältnis von Abscheidebereich zu Trennbereich bevorzugt im Bereich von 4:1 bis 1:10, vorzugsweise im Bereich von 2:1 bis 1:6 und speziell bevorzugt im Bereich von 1:1 bis 1:3, liegt.

Ferner kann vorgesehen sein, dass das Volumenverhältnis von Abscheidebereich zu Trennbereich bevorzugt im Bereich von 6:1 bis 1:6, vorzugsweise im Bereich von 4:1 bis 1:4 und speziell bevorzugt im Bereich von 2:1 bis 1:2, liegt.

In einer weiteren Ausführungsform kann vorgesehen sein, dass das Volumenverhältnis von Abscheidebereich zu Gasausleitbereich bevorzugt im Bereich von 10:1 bis 1:10, vorzugsweise im Bereich von 5:1 bis 1:5 und speziell bevorzugt im Bereich von 2:1 bis 1:2, liegt.

Ferner kann vorgesehen sein, dass das Volumenverhältnis von Trennbereich zu Gasausleitbereich bevorzugt im Bereich von 10:1 bis 1:4, vorzugsweise im Bereich von 6:1 bis 1:2 und speziell bevorzugt im Bereich von 3:1 bis 1:3, liegt.

Ferner kann vorgesehen sein, dass die Höhe des Abscheidebereichs bevorzugt im Bereich von 1 cm bis 100 cm, besonders bevorzugt im Bereich von 5 cm bis 20 cm liegt.

Weiterhin kann vorgesehen sein, dass die Breite des Abscheidebereichs bevorzugt im Bereich von 0,5 cm bis 20 cm, besonders bevorzugt im Bereich von 1,5 cm bis 10 cm liegt.

Darüber hinaus kann vorgesehen sein, dass die Tiefe des Abscheidebereichs bevorzugt im Bereich von 0,5 cm bis 20 cm, besonders bevorzugt im Bereich von 1,5 cm bis 10 cm liegt.

Ferner kann vorgesehen sein, dass der Abstand der Einlassdüse von der Pralleinheit im Bereich von 3 mm bis 60 mm, besonders bevorzugt im Bereich von 6 mm bis 40 mm und speziell bevorzugt im Bereich von 10 mm bis 25 mm liegt.

Ferner kann vorgesehen sein, dass die Höhe des Trennbereichs bevorzugt im Bereich von 0,5 cm bis 20 cm, besonders bevorzugt im Bereich von 2 cm bis 5 cm liegt.

Weiterhin kann vorgesehen sein, dass die Breite des Trennbereichs bevorzugt im Bereich von 0,5 cm bis 20 cm, besonders bevorzugt im Bereich von 1,5 cm bis 10 cm liegt.

Darüber hinaus kann vorgesehen sein, dass die Tiefe des Trennbereichs bevorzugt im Bereich von 0,5 cm bis 20 cm, besonders bevorzugt im Bereich von 1,5 cm bis 10 cm liegt.

Ferner kann vorgesehen sein, dass die Höhe des Gasausleitbereichs bevorzugt im Bereich von 0,5 cm bis 20 cm, besonders bevorzugt im Bereich von 2 cm bis 5 cm liegt.

Weiterhin kann vorgesehen sein, dass die Breite des Gasausleitbereichs bevorzugt im Bereich von 0,5 cm bis 20 cm, besonders bevorzugt im Bereich von 1,5 cm bis 10 cm liegt.

Darüber hinaus kann vorgesehen sein, dass die Tiefe des Gasausleitbereichs bevorzugt im Bereich von 0,5 cm bis 20 cm, besonders bevorzugt im Bereich von 1,5 cm bis 10 cm liegt.

Ferner kann vorgesehen sein, dass das Verhältnis der Höhe des Abscheidebereichs zur Höhe des Trennbereichs vorzugsweise im Bereich von 1:2 bis 10:1, besonders bevorzugt im Bereich von 1:1 bis 7:1 und speziell bevorzugt im Bereich von 3:1 bis 6:1 liegt.

Ferner kann vorgesehen sein, dass Verhältnis der Höhe des Trennbereichs zur Höhe des Gasausleitbereichs im Bereich von 2:1 bis 1:10, besonders bevorzugt im Bereich von 1:1 bis 1:7 und speziell bevorzugt im Bereich von 1:3 bis 1:6 liegt.

Der Gas-Flüssig-Abscheider weist im Abscheidebereich eine Strömungsrichtung des Gases auf, die im Wesentlichen parallel zur Strömungsrichtung der Flüssigkeit ist. In diesem Bereich wird die Gas-Flüssig-Mischung durch den Gasdruck nach unten geleitet. Im Trennbereich wird die Strömungsrichtung des Gases umgeleitet, so dass diese von der Strömungsrichtung der Flüssigkeit abweicht. Im Wesentlichen fließt die Flüssigkeit nach unten, während das Gas im Trennbereich und im Gasausleitbereich nach oben strömt.

Gemäß den zuvor und nachfolgend dargelegten Ausführungen ist die Strömungsrichtung des Gases und der Flüssigkeit hierbei nicht im gesamten Abscheidebereich parallel, sondern insbesondere im unteren Bereich des Abscheidebereichs, bevorzugt im unteren Drittel des Abscheidebereichs, wobei sich diese Richtung aus der Anordnung des Einlasses und des Flüssigauslasses ergibt, so dass die Einlassdüse oberhalb des Flüssigauslasses angeordnet.

In einer weiterhin bevorzugten Ausführungsform kann vorgesehen sein, dass der Gas-Flüssig-Abscheider so aufgebaut ist, dass die Strömungsgeschwindigkeit des Gases nach der Abscheideöffnung, insbesondere im Trennbereich durch spezielle Maßnahmen verringert wird. Hierzu können Einbauten im Trennbereich vorgesehen sein, beispielsweise Umleitbleche oder Umleitgitter, die eine starke Gasströmung auf die im Trennbereich vorhandene Flüssigkeit verhindern.

Vorzugsweise kann die Abscheideöffnung so ausgestaltet sein, dass die Strömungsgeschwindigkeit des Gases vermindert wird. Ferner kann vorgesehen sein, dass die Abscheideöffnung zwei, drei, vier oder mehr Teilabscheideöffnungen aufweist, durch deren Anordnung eine Absenkung der Strömungsgeschwindigkeit des Gases bewirkbar ist. Insbesondere können zwei, drei, vier oder mehr Teilabscheideöffnungen vorhanden sein, die so angeordnet sind, dass die Strömungsgeschwindigkeit des Gases abgesenkt wird. Bevorzugt wird die Strömungsgeschwindigkeit des Gases in horizontaler Richtung um mindestens 5%, besonders bevorzugt um mindestens 15 % und speziell bevorzugt um mindestens 30% abgesenkt, wobei diese Zahlen auf den Ursprungswert der Strömungsgeschwindigkeit bezogen sind. Die Werte können beispielsweise durch entsprechende Strömungsversuche bestimmt werden, wobei diese auch durch Simulationsrechnungen erhältlich sind. Bevorzugt ergeben sich diese Werte durch die Messung der Verminderung der Flüssigkeitsmenge, die durch das Gas mitgeschleppt werden.

Vorzugsweise sind die Teilabscheideöffnungen im Wesentlichen symmetrisch angeordnet, so dass die Gasströme in horizontaler Richtung abgeschwächt werden. Bei 2, 4, 6 oder mehr Teilöffnungen sind diese dementsprechend gegenüberliegend oder bei 3, 5 Teilöffnungen in Form eines Drei- oder Fünfecks angeordnet, so dass die durch die Abscheideöffnungen strömenden Gase in horizontaler Richtung gegeneinander laufen und so eine Absenkung der Strömungsgeschwindigkeit des Gases bewirken.

Hierbei sind die Teilabscheideöffnungen vorzugsweise symmetrisch angeordnet, wobei die Symmetrieachse oder die Symmetrieebne parallel zur Strömungsrichtung des Gases beziehungsweise Flüssigkeit im Abscheidebereich verläuft. Je nach Anzahl der Teilabscheideöffnungen liegt eine Punkt oder eine Spiegelsymmetrie vor. Der Begriff "im Wesentlichen symmetrisch", dass eine wirksame Abschwächung der Strömungsgeschwindigkeit des Gases im Trennbereich erzielt wird. Vorzugsweise ist diese Symmetrie durch die Geometrie der Teilabscheideöffnungen und/oder der Geometrie der Gasleiteinheit definiert. Vorzugsweise liegt das Verhältnis der Flächen der Teilabscheideöffnungen im Bereich von 2:1 bis 1:2, besonders bevorzugt 1,5:1 bis 1:1,5, speziell bevorzugt 1,2:1 bis 1:1,2 bei zwei Teilabscheideöffnungen. Bei drei oder mehr Teilabscheideöffnungen gelten die Werte entsprechend für die verschiedenen Paare der Teilabscheideöffnungen, so dass das Verhältnis der Fläche der größten Teilabscheideöffnung zur Fläche der kleinsten Teilabscheideöffnung vorzugsweise höchstens 2:1, bevorzugt höchstens 1,5:1 und speziell bevorzugt 1,2:1 beträgt.

Hierbei kann der Gas-Flüssig-Abscheider ein, zwei oder mehr Abscheidebereiche mit jeweils einer Einlassdüse, einer Pralleinheit und einer Gasleiteinheit aufweisen. In einer bevorzugten Ausgestaltung kann vorgesehen sein, dass der Gas-Flüssig-Abscheider genau eine Einlassdüse mit einer Pralleinheit umfasst und die Gasleiteinheit zu zwei, drei oder mehr Bereichen aufgetrennt ist, die jeweils eine (Teil)Abscheideöffnung umfassen. In einer weiteren Ausgestaltung kann vorgesehen sein, dass der Gas-Flüssig-Abscheider mehrere getrennte Abscheidebereiche umfasst mit jeweils genau einer Einlassdüse mit einer Pralleinheit, wobei die Abscheideöffnungen der verschiedenen (Teil)Abscheidebereiche mit genau einem Trennbereich verbunden sind. In noch einer weiteren bevorzugten Ausgestaltung kann vorgesehen sein, dass der Gas-Flüssig-Abscheider zwei oder mehr Einlassdüsen mit einer Pralleinheit umfasst, die so ausgestaltet sind, dass die durch zwei oder mehr Einlassdüsen geleiteten Gas-Flüssigströme aufeinander zu gerichtet sind, wie dies zuvor dargelegt wurde, und die Gasleiteinheit zu zwei, drei oder mehr Bereichen aufgetrennt ist, die jeweils eine (Teil)Abscheideöffnung umfassen. Hierdurch werden die die über die verschiedenen (Teil)Abscheideöffnungen geleiteten Gasströme in den gleichen Trennbereich geleitet und die Strömungsgeschwindigkeiten der Gase vermindern sich gegenseitig.

Vorzugsweise ist der Gas-Flüssig-Abscheider so aufgebaut ist, dass die Strömungsgeschwindigkeit des Gases im Trennbereich möglichst stark vermindert wird, um ein Mitführen oder Aufnehmen der im unteren Bereich des Trennbereichs vorliegenden Flüssigkeit zu verhindern. In einer bevorzugten Ausführungsform, in der zwei, drei, vier oder mehr Teilabscheideöffnungen vorhanden sind, sind diese bevorzugt entsprechend symmetrisch ausgestaltet. Bei einer bevorzugten Ausführungsform mit zwei Abscheideöffnungen sind diese daher vorzugsweise im Wesentlichen gleich groß und gegenüberliegend, so dass die Gasströmung minimiert wird. Im Wesentlichen bedeutet vorzugsweise, dass das Verhältnis der Gasflussrate bevorzugt im Bereich von 2:1 bis 1:2, besonders im Bereich von 1,5:1 bis 1:1,5, insbesondere bevorzugt im Bereich von 1,2:1 bis 1:1,2 liegt. Bei drei oder mehr Teilabscheideöffnungen gelten die Werte entsprechend für die verschiedenen Paare der Teilabscheideöffnungen, so dass das Verhältnis der Gasflussrate der größten Teilabscheideöffnung zur Gasflussrate der kleinsten Teilabscheideöffnung vorzugsweise höchstens 2:1, bevorzugt höchstens 1,5:1 und speziell bevorzugt 1,2:1 beträgt.

Die Gasflussrate kann insbesondere aus der Austrittsfläche der jeweiligen Teilabscheideöffnung unter Berücksichtigung der Geometrie der Gasleiteinheit errechnet werden. Die Gasflussrate der Abscheideöffnung kann über die Flussrate bestimmt werden, bei der die Chromatographie erfolgt, wobei die Austrittsfläche der Abscheideöffnung zu berücksichtigen ist.

Bei einer Ausführungsform mit zwei oder mehr Teilabscheideöffnungen, die gemeinsam als Abscheideöffnung anzusehen sind, gelten die zuvor und nachfolgend dargelegten Größenangaben, beispielsweise Angaben zu Flächen, Längen, Breiten usw. entsprechend, wobei unter dem Begriff "Abscheideöffnung" die Gesamtheit der Teilabscheideöffnungen zu verstehen ist.

Eine besonders bevorzugte Ausführungsform weist genau ein oder zwei Abscheidebereich(e) mit einer Einlassdüse, einer Pralleinheit und einer Gasleiteinheit auf, wobei genau zwei (Teil)Abscheideöffnungen vorgesehen sind. Diese Ausgestaltung kann in einer besonders einfachen Weise durch spanende Bearbeitung, vorzugsweise Fräsen eines Materialblocks hergestellt werden, der vorzugsweise aus Kunststoff ist. Vorzugsweise wird eine Seitenwand durch eine Deckplatte gebildet, die durch Druck, der beispielsweise durch Verschrauben gebildet wird, mit dem ausgefrästen Materialblock verbunden wird. Durch einfaches Entfernen der Schrauben und Entfernen der Deckplatte kann der Gas-Flüssig-Abscheider zuverlässig gereinigt werden.

In einer bevorzugten Ausführungsform ist im Abscheidebereich eine Umleiteinheit, vorzugsweise eine Aussparung vorgesehen, wobei die Einlassdüse den Gasstrom zunächst auf die erste Pralleinheit leitet, wobei in dieser Ausführungsform bevorzugt zusätzlich die Strömungsgeschwindigkeit des Gases im Trennbereich möglichst stark vermindert wird, um ein Mitführen oder Aufnehmen der im unteren Bereich des Trennbereichs vorliegenden Flüssigkeit zu verhindern, wie dies zuvor bereits dargelegt wurde. In einer besonders bevorzugten Ausführungsform kann hierbei vorgesehen sein, dass die zweite Pralleinheit im Bereich des oberen Abschlusses vorgesehen ist, so dass die Umleiteinheit den Gasstrom auf einen Bereich im oberen Abschluss leitet. Besonders bevorzugt ist die zweite Pralleinheit als Innenwölbung ausgestaltet ist. Hierbei ist die Form der Innenwölbung unkritisch.

In dieser besonders bevorzugten Ausführungsform, in der die zweite Pralleinheit als Innenwölbung ausgestaltet ist, kann vorgesehen sein, dass der Abscheidebereich einen oberen Abschluss umfasst, wobei dieser obere Abschluss mehr als eine Krümmung oder einen Winkel umfasst, so dass zwischen zwei höheren Punkten im oberen Bereich ein tieferliegender Punkt vorgesehen ist, wobei der tieferliegender Punkt der Krümmung oder der Winkel vorzugsweise mittig angeordnet ist, und so auf einer Linie mit der Einlassdüse liegt, die parallel zur Gasflussrichtung beziehungsweise der Flussrichtung der Flüssigkeit, also von oben nach gedacht werden kann, wobei der obere Abschluss vorzugsweise in zwei Seitenwände übergeht, so dass der Übergang zwischen den Seitenwänden und dem oberen Abschluss mindestens doppelt gekrümmt ist.

Die Ausprägung der Innenwölbung beziehungsweise die Ausgestaltung der Form mit mehr als einer Krümmung oder einem Winkel im oberen Abschluss unterliegt keiner besonderen Begrenzung und kann entsprechend den weiteren Ausgestaltungen angepasst werden. Beispielsweise kann vorgesehen sein, dass die Höhe der Innenwölbung bevorzugt im Bereich von 1 bis 30 mm, besonders bevorzugt im Bereich von 2 bis 15 mm und speziell bevorzugt im Bereich von 3 bis 10 mm liegt. Die Höhe der Innenwölbung bezeichnet den Abstand zwischen dem höchsten Punkt des oberen Abschlusses und dem tiefsten zwischen den Seitenwänden liegenden Punktes des oberen Abschlusses.

Ferner kann vorgesehen sein, dass der Abstand zwischen der Ausleitöffnung der Umleiteinheit, vorzugsweise der Aussparung und dem nächstliegenden Punkt der Innenwölbung, auf den die Umleiteinheit den Gasstrom vorzugsweise lenkt, liegt vorzugsweise im Bereich von 0,8 bis 25 mm, besonders bevorzugt im Bereich von 1,5 bis 20 mm und speziell bevorzugt im Bereich von 2 bis 10 mm.

Die zuvor und nachfolgend beschriebene Ausführungsform mit zwei oder mehr Teilabscheideöffnungen ist gegenüber anderen Ausgestaltungen besonders bevorzugt, wobei überraschend festgestellt wurde, dass hierdurch die Flüssigkeitsmenge, die durch das Gas mitgeschleppt wird, sehr gering gehalten werden kann. Diese Verbesserung gilt insbesondere für stark unterschiedliche Flüssigkeitsanteile im Lösungsmittelgemisch, welches zur Chromatographie eingesetzt wird. Daher ist diese Ausführungsform zur Durchführung von Gradientenchromatographien besonders geeignet, bei denen die Anteile des bei Raumtemperatur und Normaldruck flüssigen Lösungsmittels und des Fluids, welches bei Raumtemperatur und Normaldruck gasförmig ist, stark variieren, wie dies zuvor und nachfolgend ausführlich beschrieben ist.

Die zuvor dargelegten bevorzugten Eigenschaften des Gas-Flüssig-Abscheiders benötigen eine Definition der verschiedenen Bereiche, die jeweils in einem Fließkontakt miteinander stehen, da das Gemisch aus Gas- und Flüssigkeitsphase über den Abscheidebereich in den Trennbereich übergeleitet werden, in welchem die Flüssigkeit von der Gasphase getrennt wird und das Gas in den Gasausleitbereich überführt werden. Hierbei bildet die Abscheideöffnung die Trennung zwischen Abscheidebereich und Trennbereich, wobei die Ebene in der die Abscheideöffnung endet den Übergang zum Trennbereich markiert.

Der Übergang zwischen Trennbereich und Gasausleitbereich wird ebenfalls durch eine Öffnung markiert, die jedoch im Vergleich zur Abscheideöffnung relativ groß ist. Diese Öffnung ist definiert durch die Ebene, die auf der Höhe der Abscheideöffnung angeordnet ist und senkrecht zur Richtung der Gasflussrichtung des Gas-Flüssigkeitsgemisches in dem Abscheidebereich beziehungsweise parallel zur Flussrichtung der Gasphase verläuft, sobald diese die Abscheideöffnung vom Abscheidebereich kommend in den Trennbereich übergeht beziehungsweise beim Betrieb parallel zum Flüssigkeitsspiegel ist. Die durch die Ausdehnung der Öffnung definierte Ebene wird so ausgewählt, dass diese die Minimalfläche zwischen Trennbereich und Gasausleitbereich darstellt, wobei diese Ebene die Abscheideöffnung berührt und im Wesentlichen parallel zum Boden des Trennbereichs beziehungsweise beim Betrieb parallel zum Flüssigkeitsspiegel liegt.

Ferner kann vorgesehen sein, dass das Verhältnis von Eintrittsfläche des im Abscheidebereich vorgesehene Einlasses zum Abstand von Einlass und Pralleinheit im Bereich von 5:1 mm²/mm bis 1:10 mm²/mm, vorzugsweise 2:1 mm²/mm bis 1:5 mm²/mm liegt.

Der Gas-Flüssigabscheider der vorliegenden Erfindung kann aus jedem bekannten Material hergestellt werden, solange die Anforderungen, die durch die Lösungsmittel und die physikalischen Gegebenheiten vorgegeben sind, erfüllt werden. Vorzugsweise kann ein transparentes Material eingesetzt werden, durch welches der Trennvorgang sichtbar ist, so dass bei Belagbildung oder ähnlichem eine rasche Fehleranalyse ermöglicht wird.

Vorzugsweise kann der Gas-Flüssigkeits-Separator aus Metallen, die vorzugsweise Säure- und Basenbeständig ausgestaltet sind, aus mineralischen Gläsern und/oder Kunststoffen, beispielsweise Fluorpolymeren, Polyetheretherketon (PEEK) oder ähnlichen Materialien, die vorzugsweise Lösemittelbeständig sind, hergestellt werden.

Der Gas-Flüssig-Abscheider weist vorzugsweise ein Volumen im Bereich von 20ml bis 100ml, besonders bevorzugt im Bereich von 20ml bis 70ml, speziell bevorzugt im Bereich von 20ml bis 50ml, auf. Bei einer im Wesentlichen quaderförmigen Gestalt, die beispielsweise im oberen und/oder unteren Bereich des Gas-Flüssig-Abscheiders, der durch die Einlassdüse beziehungsweise durch den Flüssigauslass gegeben ist, bogenförmig oder als Kuppel ausgestaltet sein kann, liegt die Höhe des Gas-Flüssig-Abscheiders vorzugsweise im Bereich von 8cm bis 150cm, besonders bevorzugt im Bereich von 10cm bis 12cm, wobei die Höhe durch die Längenausdehnung in Gasflussrichtung, als von Einlassdüse in Richtung Flüssigauslass gegeben ist. Die Breite und Tiefe des Gas-Flüssig-Abscheiders liegen jeweils vorzugsweise im Bereich von 15mm bis 60mm, besonders bevorzugt im Bereich von 15mm bis 25mm.

Vorzugsweise kann vorgesehen sein, dass der Gas-Flüssig-Abscheider nicht kreiszylinderförmig ist, vorzugsweise eine im Wesentlichen quaderförmige Grundstruktur aufweist, die eine obere und eine untere bogenförmigen Abdeckung aufweist.

Der Aufbau und die Herstellung eines erfindungsgemäßen Gas-Flüssig-Abscheiders können auf jede Weise erfolgen. Gemäß einer bevorzugten Ausführungsform kann der Gas-Flüssig-Abscheider zerlegbar ausgestaltet sein, so dass einzelne Bauteile zusammen- und auseinander gebaut werden können. Hierdurch kann der Gas-Flüssig-Abscheider bei einer Verschmutzung leicht gereinigt werden. Beispielsweise kann ein im Wesentlichen quaderförmiger Grundkörper mit einer geeigneten Aussparung hergestellt werden, auf die eine Abdeckung, die Seitenwand dient über eine Verschraubung aufgebracht werden. Die als Abdeckung dienende Seitenwand kann die Funktion der Pralleinheit übernehmen und/oder als Teil der Gasleiteinheit übernehmen, wie dies zuvor beschrieben wurde. Ein weiterer Teil der Gasleiteinheit, der vorzugsweise weiterhin eine Seitenwand des Gasausleitbereichs darstellt, kann in dieser Ausführungsform in den im Wesentlichen quaderförmiger Grundkörper mit einer geeigneten Aussparung durch einen Formschluss, durch Verschweißen, vorzugsweise Laserschweißen, Verkleben oder ähnlichem befestigt werden, so dass die zuvor dargelegten Bereiche, insbesondere mindestens ein Abscheidebereich, mindestens ein Trennbereich und mindestens ein Gasausleitbereich entstehen. Bevorzugt wird ein Gas-Flüssig-Abscheider durch spanende Bearbeitung, vorzugsweise Fräsen eines Materialblocks hergestellt, der vorzugsweise aus Kunststoff ist. Vorzugsweise wird eine Seitenwand durch eine Deckplatte gebildet, die durch Druck, der beispielsweise durch Verschrauben gebildet wird, mit dem ausgefrästen Materialblock verbunden wird. Durch einfaches Entfernen der Schrauben und Entfernen der Deckplatte kann der Gas-Flüssig-Abscheider zuverlässig gereinigt werden, wie dies zuvor und nachfolgend beschrieben ist.

Der Gas-Flüssig-Abscheider kann im Allgemeinen bei atmosphärischem Druck betrieben werden. Um jedoch eine Ansammlung von größeren Mengen an Flüssigkeit zu vermeiden, z.B. von Methanol kann der Gas-Flüssigkeits-Abscheider bei einem mäßigen inneren Gegendruck von beispielsweise im Bereich von 0,1 bar bis 4 bar von einem Rückdruckregler betrieben werden. Demgemäß kann vorgesehen sein, dass die Chromatographie-Anlage nach dem Gasauslass ein Rückdruckregler vorgesehen ist, der vorzugsweise im Bereich von 1 bar bis 4 bar Überdruck (Absolutdruck 2 bar bis 5 bar), vorzugsweise 2 bar bis 3 bar Überdruck regelbar ist. Die über den Trennbereich gesammelte und durch den Flüssigkeitsauslasskanal bereitgestellte Flüssigkeitskomponente ermöglicht jedoch eine automatisierte Fraktionierung, die unter atmosphärischem Druck betrieben werden kann. Mit Hilfe des Gas-Flüssigkeits-Abscheiders und vergleichbar mit konventioneller HPLC-Analyse kann auch für die SFC-Analyse eine vollautomatische Fraktionssammlung realisiert werden.

Da Innenwände und Bauteile des Gas- / Flüssigkeitsabscheiders im Abscheide- und im Trennbereich im Wesentlichen dauerhaft befeuchtet werden, kann sich nicht nur eine Selbstreinigungseffekt entwickeln, sondern es kann auch ein relativ geringer Grad an Kreuzkontamination von Proben erreicht werden. Als weiterer Vorteil induziert der Gas-Flüssig-Abscheider eine relativ geringe Peakverbreiterung in den resultierenden Chromatogrammen.

Gemäß einem anderen Aspekt wird auch ein Umwandlungskit bereitgestellt, durch das ein Hochleistungs-Flüssig-Chromatographiesystem (HPLC) in ein SFC-System umwandelt werden kann. Ein derartiges Kit umfasst mindestens einen Gasflüssigkeitsabscheider, wie oben beschrieben. Vorzugsweise enthält das Kit weitere Komponente, wie diese nachfolgend beschrieben sind, um eine HPLC-Anlage in ein SFC-System umzuwandeln, wie beispielsweise Wärmetauscher oder Rückdruckregler.

Der Gas-Flüssig-Abscheider dient insbesondere in Chromatographie-Anlage, die für eine überkritische Flüssigkeitschromatographie ausgelegt ist.

Ein solches System wird beispielhaft unter Verwendung von überkritischem CO₂ zusammen mit einem Lösungsmittel beispielsweise mit Methanol betrieben. Demgemäß weist eine für überkritische Flüssigkeitschromatographie ausgelegte Chromatographie-Anlage mindestens einen Speicherbehälter für das Lösungsmittel und einen Speicherbehälter für das überkritische Fluid, beispielsweise CO₂ auf. Im Allgemeinen wird das Fluid aus dem Speicher entnommen und mit einer jeweils mindestens einer Pumpe in die ein Mischelement überführt, welche mit einer Chromatographiesäule in Fließverbindung steht. Die Pumpen und/oder das Mischelement sowie die Chromatographiesäule können mit einer Temperierung versehen sein, um jeweils eine vorgegebenen Temperatur einstellen zu können. Hierzu können insbesondere Wärmetauscher vorgesehen sein. Die Zugabe von zu trennenden Mischungen, insbesondere aufzureinigenden Substanzen, kann durch bekannte Vorrichtungen, beispielsweise Injektoren erfolgen, die vorzugsweise in der Leitung vorgesehen sind, in der das Lösungsmittel zum Mischelement geführt wird.

Das die Chromatographiesäule verlassende Fluid wird vorzugsweise zumindest teilweise einer Detektions- oder Analyseeinheit zugeführt. Beispiele für eine Detektions- oder Analyseeinheit sind unter anderem UV-Detektoren und/oder Massenspektrometer.

Nach der Chromatographiesäule und vorzugsweise nach der Detektions- oder Analyseeinheit ist im Allgemeinen ein Rückdruckregler und vorzugsweise nach dem Rückdruckregler ein Wärmetauscher vorgesehen. Das den Wärmetauscher verlassende Aerosol wird vorzugsweise nachfolgend einem erfindungsgemäßen Gas-Flüssig-Abscheider zugeführt.

Die Gasphase des Aerosols kann je nach Art des Gases aufgefangen und aufbereitet werden oder, beispielsweise bei Verwendung von CO₂ auch in die Umgebung freigesetzt werden.

Die Flüssigkeitsphase des Aerosols wird bevorzugt in einem Fraktionssammler gesammelt. Die gesammelten Fraktionen werden besonders bevorzugt automatisch als Hauptfraktionen gesammelt, während überschüssiges Lösungsmittel einer Aufbereitung oder einer Entsorgung unterworfen werden kann. Die Verbindungsleitung zwischen dem Flüssigauslass des Gas-Flüssig-Abscheiders und des Fraktionssammlers kann bevorzugt so ausgestaltet sein, dass Reste der Gasphase, vorzugsweise CO₂-Reste über diese Verbindung entweichen können. Hierfür kann ein semipermeables Kunststoffmaterial eingesetzt werden, beispielsweise Teflon, besonders bevorzugt AF 2400 (kommerziell erhältlich von DuPont).

Das SFC- Chromatographiesystem ist vorzugsweise bei einem Volumenstrom im Bereich von 10 ml/min bis 450 ml/min, besonders bevorzugt im Bereich von 50 ml/min bis 300 ml/min und speziell bevorzugt 100 ml/min bis 250 ml/min betreibbar. Weiterhin kann vorgesehen sein, dass das SFC- Chromatographiesystem vorzugsweise bei einem Volumenstrom von mindestens 10 ml/min, besonders bevorzugt von mindestens 50 ml/min und speziell bevorzugt von mindestens 100 ml/min betreibbar ist.

Ein weiterer Gegenstand der vorliegenden Erfindung ist ein Verfahren zur Trennung eines Gas-Flüssiggemisches, bei welchem ein erfindungsgemäßer Gas-Flüssig-Abscheider oder eine Chromatographie-Anlage mit einem erfindungsgemäßen Gas-Flüssig-Abscheider eingesetzt wird.

Zur Durchführung einer Trennung mit einem überkritischen Fluid wird vorzugsweise ein Gas eingesetzt, welches relativ einfach in einen überkritischen Zustand versetzt werden kann. Zu den bevorzugten Gasen, die diese Eigenschaften aufweist gehören unter anderem Kohlendioxid (CO₂), Ammoniak (NH₃), Freon, Xenon, wobei Kohlendioxid (CO₂) besonders bevorzugt ist.

Ferner kann vorgesehen sein, dass bei einem erfindungsgemäßen Verfahren ein anorganisches oder organisches Lösungsmittel eingesetzt wird, welches unter den üblichen Trennbedingungen, insbesondere bei 25°C und Atmosphärendruck (1023mbar) flüssig ist. Hierbei kann ein polares oder unpolares Lösungsmittel eingesetzt werden, je nach Art der aufzutrennenden oder aufzureinigenden Verbindungen.

Bevorzugt kann vorgesehen sein, dass das in den überkritischen Zustand zu bringende Gas-Flüssiggemisch ein polares Lösungsmittel und ein Gas umfasst, welches ausgewählt ist aus der Gruppe bestehend aus, CO₂, NH₃, Freon, Xenon, vorzugsweise CO₂. Vorzugsweise ist das polare Lösungsmittel ein Alkohol, vorzugsweise Methanol, Ethanol oder Propanol, Hexan, Mischungen mit Dichlormethan, Chloroform, Wasser (vorzugsweise bis max. 3 Vol%, da ansonsten eine Mischungslücke auftreten kann), ein Aldehyd oder ein Keton, vorzugsweise Methylethylketon; ein Ester, vorzugsweise Essigsäureethylester; oder ein Ether, vorzugsweise Tetrahydrofuran.

Bei Verwendung eines polaren Lösungsmittels kann bevorzugt vorgesehen sein, dass die Pralleinheit einen Oberflächenbereich mit einer Oberflächenenergie im Bereich von 35 mN/m bis 100 mN/m, besonders bevorzugt im Bereich von 50 mN/m bis 80mN/m aufweist.

Ferner kann vorgesehen sein, dass das in den überkritischen Zustand zu bringende Gas-Flüssiggemisch ein unpolares Lösungsmittel und ein Gas umfasst, welches ausgewählt ist aus der Gruppe bestehend aus, CO₂, NH₃, Freon, Xenon, vorzugsweise CO₂. Vorzugsweise ist das unpolare Lösungsmittel ein aliphatischer Kohlenwasserstoff, vorzugsweise Hexan, Cyclohexan, Heptan, Octan; ein aromatischer Kohlenwasserstoff, vorzugsweise Benzol, Toluol, Xylol; ein Ester, vorzugsweise Essigsäureethylester; oder ein Ether, vorzugsweise Tetrahydrofuran.

Bei Verwendung eines unpolaren Lösungsmittels kann bevorzugt vorgesehen sein, dass die Pralleinheit einen Oberflächenbereich mit einer Oberflächenenergie im Bereich von 10mN/m bis 40mN/m, besonders bevorzugt im Bereich von 15mN/m bis 30mN/m aufweist.

In einer bevorzugten Ausführungsform des Verfahren, bei dem die Chromatographie-Anlage ein Rückdruckregler umfasst durch welches der Druck in dem Gas-Flüssig-Abscheiders regelbar ist, kann vorgesehen sein, dass die Regelung des Drucks in Abhängigkeit vom Lösungsmittelgehalt des Gas-Flüssiggemischs gewählt wird, vorzugsweise kann die Regelung so ausgestaltet sein, dass bei einem hohen Lösungsmittelgehalt ein hoher Druck im Gas-Flüssig-Abscheider vorgesehen ist.

Nachfolgend sollen bevorzugte Ausführungsformen der vorliegenden Erfindung anhand von zehn Figuren beispielhaft beschrieben werden, ohne dass hierdurch eine Begrenzung der Erfindung erfolgen soll. Es zeigen:
- Figur 1: eine schematische Längsschnittdarstellung eines erfindungsgemäßen Gas-Flüssig-Abscheiders,
- Figur 2: eine schematische Querschnittsdarstellung eines erfindungsgemäßen Gas-Flüssig-Abscheiders,
- Figur 3: eine schematische Aufsicht eines erfindungsgemäßen Gas-Flüssig-Abscheiders,
- Figur 4: eine schematische Längsschnittdarstellung einer weiteren Ausführungsform eines erfindungsgemäßen Gas-Flüssig-Abscheiders,
- Figur 5: eine schematische Längsschnittdarstellung einer weiteren Ausführungsform eines erfindungsgemäßen Gas-Flüssig-Abscheiders,
- Figur 6: eine schematische Längsschnittdarstellung einer weiteren Ausführungsform eines erfindungsgemäßen Gas-Flüssig-Abscheiders
- Figur 7: eine schematische Längsschnittdarstellung einer weiteren Ausführungsform eines erfindungsgemäßen Gas-Flüssig-Abscheiders,
- Figur 8: eine schematische Längsschnittdarstellung der in Figur 7 dargelegten Ausführungsform eines erfindungsgemäßen Gas-Flüssig-Abscheiders, wobei die Schnittebene um 90° gegenüber der in Figur 7 dargelegten Schnittebene gedreht ist,
- Figur 9: eine schematische Längsschnittdarstellung einer weiteren Ausführungsform eines erfindungsgemäßen Gas-Flüssig-Abscheiders,
- Figur 10: eine schematische Darstellung eines Chromatographiesystems mit einem erfindungsgemäßen Gas-Flüssig-Abscheider.

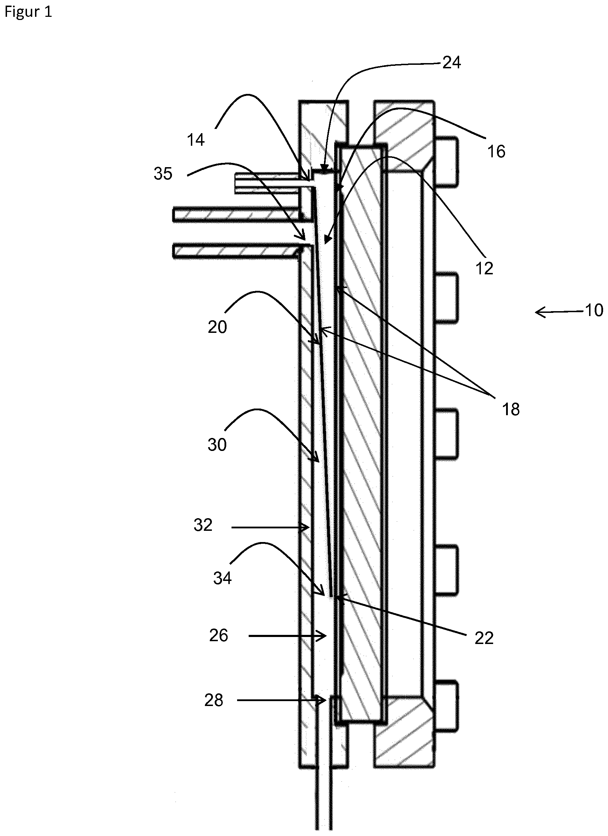

Figur 1 beschreibt einen erfindungsgemäßen Gas-Flüssig-Abscheider 10 in einer Längsschnittdarstellung.

Der Gas-Flüssig-Abscheider 10 umfasst einen Abscheidebereich 12 mit einer Einlassdüse 14, einer Pralleinheit 16 und einer Gasleiteinheit 18. Die Gasleiteinheit 18 wird von der vorliegend als Prallplatte ausgebildeten Pralleinheit 16 einer Gasbeschleunigungsplatte 20 sowie im Längsschnitt nicht dargestellten weiteren zwei Seitenwänden gebildet. Dargestellt ist insbesondere die vorliegend keilförmig ausgebildete Form des Abscheidebereichs 12, durch die ein Gas ausgehend von Bereich der Einlassdüse 14 hin zur Abscheideöffnung 22 beschleunigt wird.

Die vorliegend als Prallplatte ausgebildeten Pralleinheit 16 kann eine strukturierte oder glatte Oberfläche aufweisen. Die Gasbeschleunigungsplatte 20 kann von Richtung Einlassdüse 14 in Richtung Abscheideöffnung 22 eben sein oder leicht konkav gekrümmt, so dass die vorliegend ersichtliche Abnahme des Abstands zwischen Prallplatte 16 und Gasbeschleunigungsplatte 20 verringert wird. Nach oben ist der Abscheidebereich 12 über einen oberen Abschluss 24 begrenzt.

Der Gas-Flüssig-Abscheider 10 umfasst einen Trennbereich 26 mit einem Flüssigauslass 28, wobei der Trennbereich 26 über die Abscheideöffnung 22 mit dem Abscheidebereich 12 verbunden ist, so dass der Abscheidebereich 12 in Fließkontakt mit dem Trennbereich 26 steht.

Vorliegend bildet die als Prallplatte ausgebildeten Pralleinheit 16 eine Seitenwand des Trennbereichs 26. Der Boden des Gas-Flüssig-Abscheiders 10 wird vom unteren Abschluss des Trennbereichs 26 gebildet. Dieser Boden kann so ausgestaltet sein, dass der Flüssigauslass 28 an der tiefsten Stelle des Bodens vorgesehen ist.

Eine Seitenwand 32 des Gasausleitbereichs 30 sowie den beiden im Längsschnitt nicht dargestellten Seitenwänden bilden zusammen mit einer Öffnung 34, die zwischen Gasausleitbereich 30 und dem Trennbereich 26 vorgesehen ist, sowie der Abscheideöffnung 22 die weiteren Begrenzungen des Trennbereichs.

Im Trennbereich 26 wird die Gasphase von der Flüssigkeitsphase getrennt, wobei vorzugsweise das Gas durch die Gasleiteinheit 18 in Richtung Abscheideöffnung 22 beschleunigt wird, so dass die Flüssigkeit in Richtung Boden des Trennbereichs 26 überführt wird.

Die Gasphase wird über die Öffnung 34, die zwischen Gasausleitbereich 30 und dem Trennbereich 26 vorgesehen ist, in den Gasausleitbereich 30 geleitet. Der Gasausleitbereich 30 ist vorliegend so ausgestaltet, dass das Gas in Richtung Gasauslass 35, der im Gasausleitbereich 30 vorgesehen ist beschleunigt wird.

Vorliegend bildet die Rückwand der zuvor beschriebenen Gasbeschleunigungsplatte 20 zusammen mit der in den Trennbereich ragenden Seitenwand 32 eine entsprechende Keilform, wobei eine Kante der Gasbeschleunigungsplatte 20 mit der Seitenwand 32 verbunden ist.

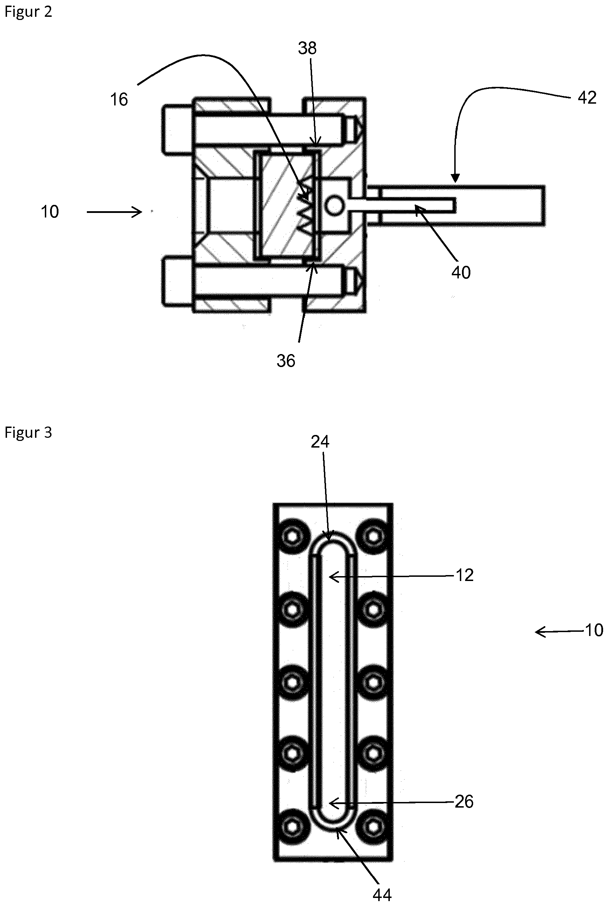

Figur 2 zeigt eine schematische Querschnittsdarstellung eines erfindungsgemäßen Gas-Flüssig-Abscheiders 10, wobei gleiche Bezugszeichen gleiche Teile beschreiben.

Zu sehen sind insbesondere die zuvor nicht dargestellten Seitenwände 36, 38 des Gas-Flüssig-Abscheiders 10. Ferner sind die Zuleitung 40 des Aerosols und die Ableitung für das Gas 42 dargestellt.

Ferner ist ersichtlich, dass in dieser Ausführungsform die als Prallplatte ausgebildeten Pralleinheit 16 eine rillenförmige Oberflächenstruktur aufweist.

Figur 3 zeigt eine schematische Aufsicht eines erfindungsgemäßen Gas-Flüssig-Abscheiders 10, wobei gleiche Bezugszeichen gleiche Teile beschreiben. Ersichtlich ist insbesondere die bevorzugte Ausgestaltung des unteren Abschluss 44 des Trennbereichs 26 und des oberen Abschluss 24 des Abscheidebereichs 12, die vorliegend jeweils bogenförmig ausgestaltet sind.

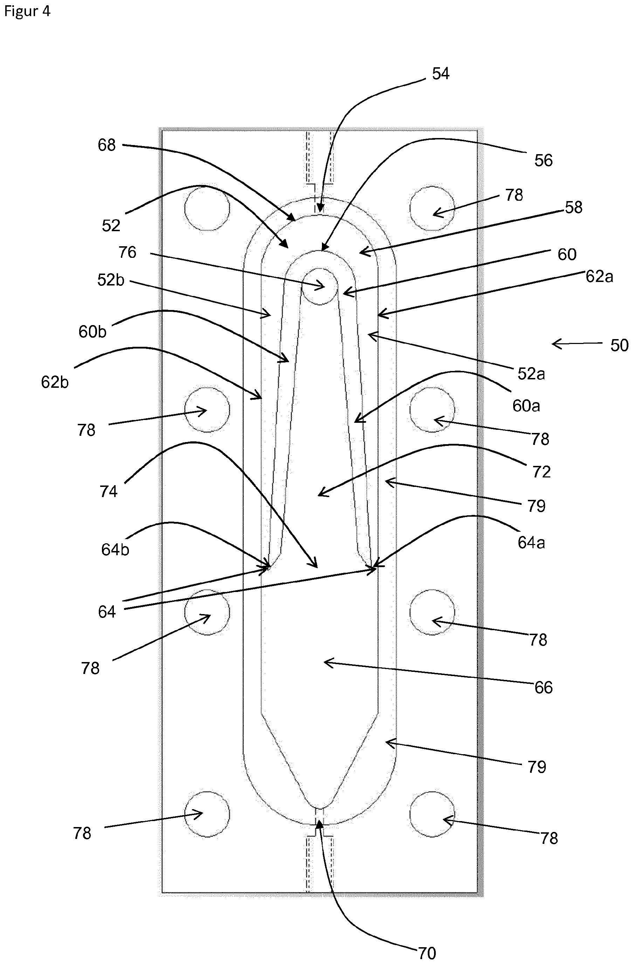

Figur 4 beschreibt einen erfindungsgemäßen Gas-Flüssig-Abscheider 50 in einer Längsschnittdarstellung.

Der Gas-Flüssig-Abscheider 50 umfasst einen Abscheidebereich 52 mit einer Einlassdüse 54, einer Pralleinheit 56 und einer Gasleiteinheit 58. Die Gasleiteinheit 58 wird von einer Gasbeschleunigungseinheit 60, zwei Seitenwänden 62a, 62b sowie einer weiteren Bodenwand und einer Deckenwand, die im Längsschnitt nicht dargestellt sind, gebildet. Dargestellt ist insbesondere die vorliegend keilförmig ausgebildete Form des Abscheidebereichs 52, durch die ein Gas ausgehend von Bereich der Einlassdüse 54 hin zur Abscheideöffnung 64 beschleunigt wird.

In der vorliegenden Ausführungsform ist der Abscheidebereich 52 in zwei Teilbereiche 52a, 52b getrennt, die jeweils über eigene Teilabscheideöffnungen 64a und 64b mit dem Trennbereich 66 verbunden sind.

In der vorliegenden Ausführungsform ist die Pralleinheit 56 im Bereich der Gasbeschleunigungseinheit 60 ausgebildet, die an dieser Stelle bogenförmig die zwei Teilbereiche 60a, 60b der Gasbeschleunigungseinheit 60 verbindet und die Teilbereiche 52a, 52b des Abscheidebereichs 52 partiell trennt. Die Einlassdüse 54 leitet das Gas-Flüssig-Gemisch auf die Pralleinheit 56. Hierdurch entsteht ein Gasstrom, der im Abscheidebereich 52 parallel zur Strömungsrichtung der Flüssigkeit verläuft. Die Gasbeschleunigungseinheit 60 weist vorliegend zwei Teilbereiche 60a, 60b auf, die von Richtung Einlassdüse 54 in Richtung Abscheideöffnung 64 zu einer Verringerung des Abstands zwischen Gasbeschleunigungseinheit 60 und der jeweiligen Seitenwand 62a, 62b führen, wobei die Teilbereiche 60a, 60b der Gasbeschleunigungseinheit 60 eben sein oder leicht konkav gekrümmt sein können. Nach oben ist der Abscheidebereich 52 über einen oberen Abschluss 68 begrenzt.

Der Gas-Flüssig-Abscheider 50 umfasst einen Trennbereich 66 mit einem Flüssigauslass 70, wobei der Trennbereich 66 über die Abscheideöffnung 64 beziehungsweise die zwei Teilabscheideöffnungen 64a und 64b mit dem Abscheidebereich 52 verbunden ist, so dass die zwei Teilbereiche 52a, 52b des Abscheidebereichs 52 in Fließkontakt mit dem Trennbereich 66 stehen.

Der Boden des Gas-Flüssig-Abscheiders 50 wird vom unteren Abschluss des Trennbereichs 66 gebildet. Dieser Boden kann so ausgestaltet sein, dass der Flüssigauslass 70 an der tiefsten Stelle des Bodens vorgesehen ist.

Der Gasausleitbereich 72 wird von der Gasbeschleunigungseinheit 60 sowie den beiden im Längsschnitt nicht dargestellten Wänden zusammen mit einer Öffnung 74 gebildet, die zwischen Gasausleitbereich 72 und dem Trennbereich 66 vorgesehen ist.

Im Trennbereich 66 wird die Gasphase von der Flüssigkeitsphase getrennt, wobei vorzugsweise das Gas durch die Gasleiteinheit 58 in Richtung Abscheideöffnung 64 beschleunigt wird, so dass die Flüssigkeit in Richtung Boden des Trennbereichs 66 überführt wird. In der vorliegenden Ausführungsform werden die beiden über die Teilabscheideöffnungen 52a, 52b in den Trennbereich 66 geleitete Teilgasströme gegeneinander geführt, so dass deren Geschwindigkeit im Trennbereich minimiert wird. Durch diese Ausgestaltung kann die Menge an im Gasstrom mitgeführter Flüssigkeit stark verringert werden.

Die Gasphase wird über die Öffnung 74, die zwischen Gasausleitbereich 72 und dem Trennbereich 66 vorgesehen ist, in den Gasausleitbereich 72 geleitet. Der Gasausleitbereich 72 ist vorliegend so ausgestaltet, dass das Gas in Richtung Gasauslass 76, der im Gasausleitbereich 72 vorgesehen ist beschleunigt wird.

Vorliegend bildet die Rückseite der zuvor beschriebenen Gasbeschleunigungseinheit 60 eine entsprechende Form, die sich nach oben verengt.

Die in Figur 4 dargelegte Ausführungsform kann sehr einfach durch Fräsen aus einem Kunststoffblock hergestellt werden. Hierbei kann die in Figur 4 nicht dargestellte Rückwand durch Bestehenlassen des Materials herstellt werden, wobei die Volumina der zuvor beschriebenen Bereiche und Teilbereiche durch entsprechende Frästiefen beziehungsweise Tiefe der Materialabtragung erhalten werden kann. Die Oberseite kann durch eine Platte, beispielsweise eine Glasplatte bereitgestellt werden, die von oben gegen den ausgefrästen Kunststoffblock gepresst wird. Das Pressen kann beispielsweise durch eine Verschraubung erzielt werden. Die entsprechenden Bohrungen sind vorliegend durch die Bezugszeichen 78 angedeutet. Die Platte, die die Oberseite bildet, wird vorzugsweise durch eine stufenförmig über die dargelegten Bereiche und Teilbereiche vorgesehene Aussparung, die als Nut angesehen werden kann, fixiert. Diese stufenförmige Aussparung ist vorliegend mit Bezugszeichen 79 angedeutet.

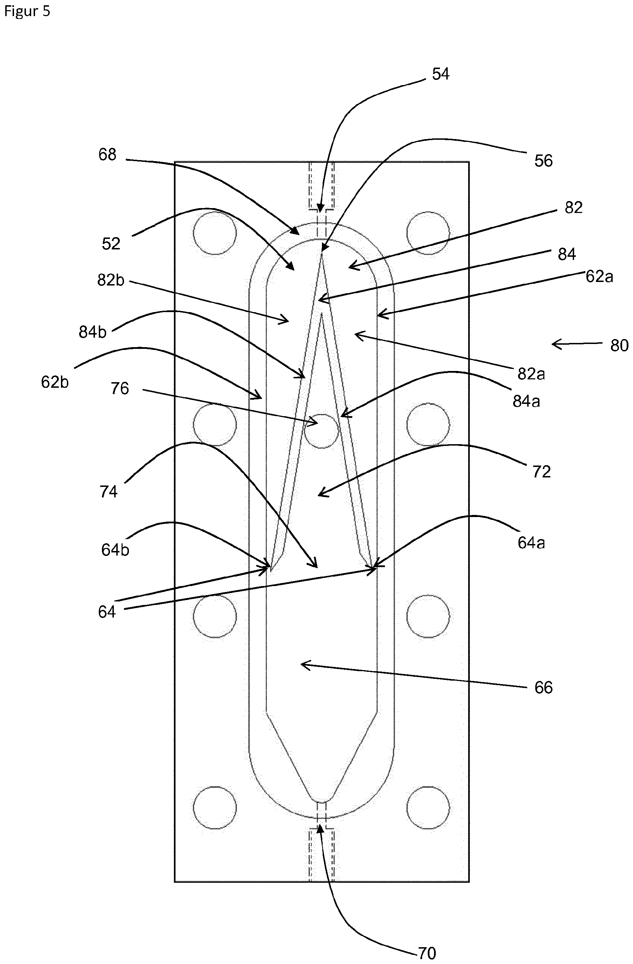

Figur 5 beschreibt einen erfindungsgemäßen Gas-Flüssig-Abscheider 80 in einer Längsschnittdarstellung. Der in Figur 5 dargestellte Gas-Flüssig-Abscheider 80 entspricht im konzeptionellen Aufbau dem in Figur 4 dargestellten Gas-Flüssig-Abscheider 50, wobei gleiche oder ähnliche Bauteile die gleichen Bezugszeichen aufweisen. Der Gas-Flüssig-Abscheider 80 umfasst einen Abscheidebereich 52 mit einer Einlassdüse 54, einer Pralleinheit 56 und einer Gasleiteinheit 82. Die Gasleiteinheit 82 wird von einer Gasbeschleunigungseinheit 84, zwei Seitenwänden 62a, 62b sowie einer weiteren Bodenwand und einer Deckenwand, die im Längsschnitt nicht dargestellt sind, gebildet.

Der wesentliche Unterschied besteht insbesondere darin, dass die Gasbeschleunigungseinheit 84 sich spitz in zwei Teilbereiche 88a und 88b trennt, im Gegensatz zur Gasbeschleunigungseinheit 60 der in Figur 4 dargestellten Ausführungsform, die im Prallbereich bogenförmig ausgebildet ist. Vorliegend wird die Düse auf den Prallbereich 56 geleitet, der relativ eben ausgebildet werden kann, so dass die Verbindungsstelle der zwei Teilbereiche 84a und 84b abgeflacht ist.

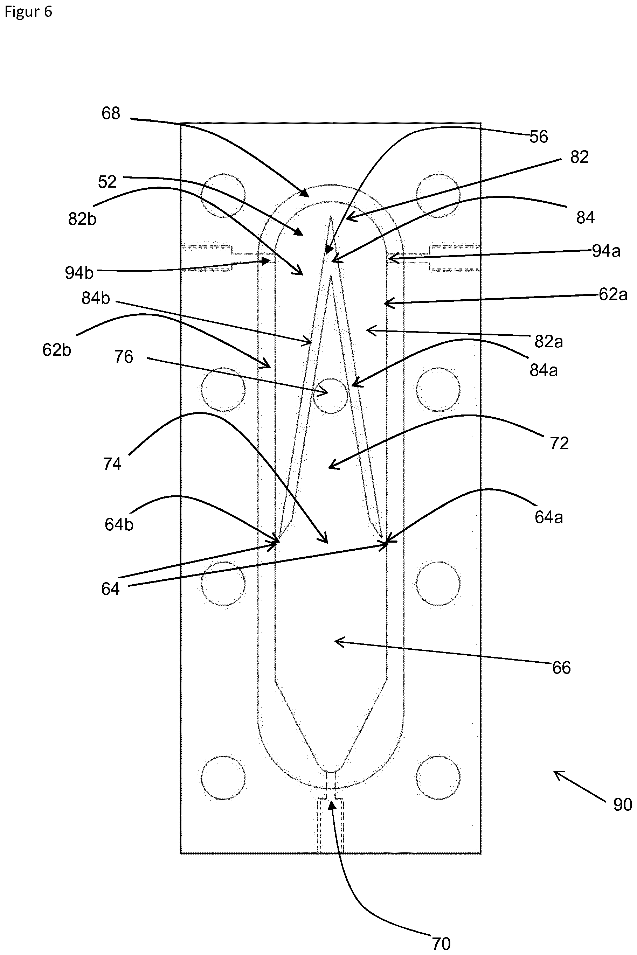

Figur 6 beschreibt einen erfindungsgemäßen Gas-Flüssig-Abscheider 90 in einer Längsschnittdarstellung. Der in Figur 6 dargestellte Gas-Flüssig-Abscheider 90 entspricht im konzeptionellen Aufbau dem in Figur 5 dargestellten Gas-Flüssig-Abscheider 80, wobei gleiche oder ähnliche Bauteile die gleichen Bezugszeichen aufweisen. Der Gas-Flüssig-Abscheider 90 umfasst einen Abscheidebereich 52 mit zwei Einlassdüsen 94a, 94b, einer Pralleinheit 56 und einer Gasleiteinheit 82.

Der wesentliche Unterschied besteht insbesondere darin, dass die zwei Einlassdüsen 94a, 94b das Aerosol auf die Gasleiteinheit 82 von zwei Seiten beziehungsweise auf die zwei Teilbereiche 82a, 82b der Gasleiteinheit 82 leiten. Es ist dem Fachmann offensichtlich, dass die Gasleiteinheit 82 zum oberen Abschluss 68 durch eine Trennwand in zwei tatsächlich getrennte Abscheidebereiche trennt werden könnte, ohne dass wesentliche Änderungen hinsichtlich der Strömung im Bereich des Trennbereichs vorhanden sind.

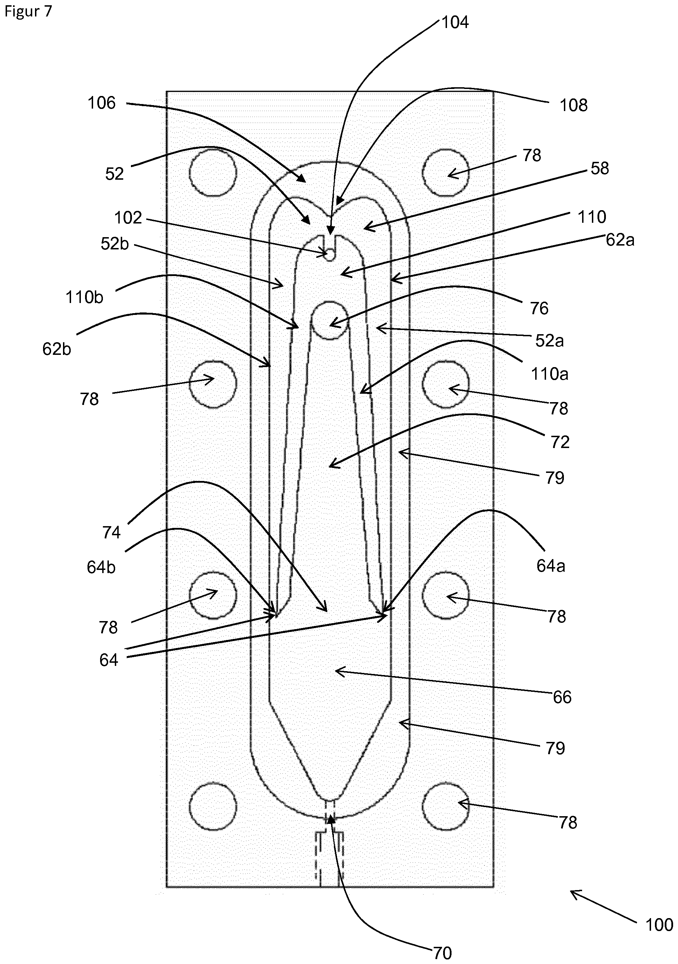

Figur 7 beschreibt einen erfindungsgemäßen Gas-Flüssig-Abscheider 100 in einer Längsschnittdarstellung. Der in Figur 7 dargestellte Gas-Flüssig-Abscheider 100 entspricht im konzeptionellen Aufbau dem in Figur 4 dargestellten Gas-Flüssig-Abscheider 50, wobei gleiche oder ähnliche Bauteile die gleichen Bezugszeichen aufweisen. Der Gas-Flüssig-Abscheider 100 umfasst einen Abscheidebereich 52 mit einer Einlassdüse 102 und einer Gasleiteinheit 58. Die Pralleinheit wird in der vorliegenden Ausführungsform durch die Deckenwand gebildet, die in Figur 7 nicht dargestellt ist.

Der wesentliche Unterschied besteht insbesondere darin, dass die Pralleinheit durch die nicht dargelegte Deckenwand gebildet wird, wobei das durch die Einlassdüse 102 in den Gas-Flüssig-Abscheider 100 zunächst auf die Deckenwand geleitet wird. Die Umleiteinheit 104 leitet den Gasstrom auf den oberen Abschluss 106, der in der vorliegenden Ausführungsform eine Innenwölbung 108 aufweist. Die Umleiteinheit 104 wird vorliegend durch eine Aussparung aus der Gasbeschleunigungseinheit 110 gebildet, die an dieser Stelle bogenförmig die zwei Teilbereiche 110a, 110b der Gasbeschleunigungseinheit 110 verbindet und die Teilbereiche 52a, 52b des Abscheidebereichs 52 partiell trennt.

Demgemäß kann der obere Abschluss 106, insbesondere den Bereich der Innenwölbung 108 als zweite Pralleinheit angesehen werden, da ein Teil des Aerosols eine weitere Prallabscheidung erfährt. Die Innenwölbung 108 zu einer Stabilisierung der Gasströmung bei, so dass der Aerosol- beziehungsweise Gasstrom gezielt in die beiden Teilbereiche 52a, 52b der Gasleiteinheit geleitet wird.

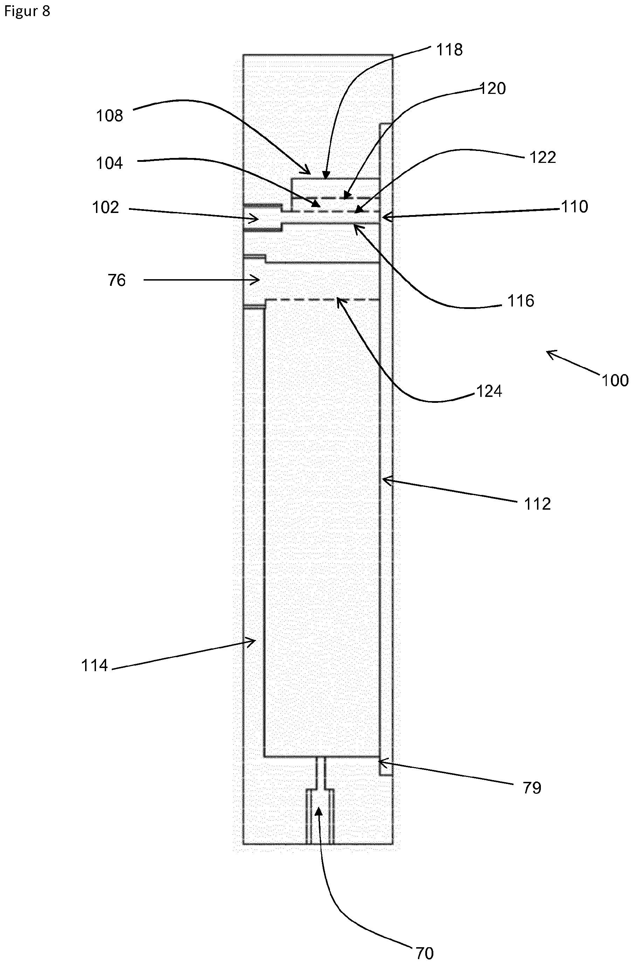

Figur 8 zeigt in Längsdarstellung den in Figur 7 beschriebenen Gas-Flüssig-Abscheider 100, wobei eine Schnittebene gezeigt ist, die senkrecht zur Darstellung ist, die in Figur 7 abgebildet ist. Die dargestellte Ebene zeigt einen Schnitt durch die Spitze der Innenwölbung 108 und den Flüssigauslass 70. Insbesondere sind die Deckenwand 112 und die Bodenwand 114 dargestellt. Die Linie 116 stellt den Bodenbereich der Umleiteinheit 104 und die Linie 118 die Spitze der Innenwölbung 108 dar. Die gestrichelten Linien 120, 122 deuten die Materialausfräsungen an, die die Umleiteinheit 104 bilden, während die gestrichelte Linie 124 den oberen Bereich der Gasausleitbereichs 72 andeutet, wobei an dieser Stelle das Gas zusammengeleitet und in den Gasauslass 76 überführt wird.

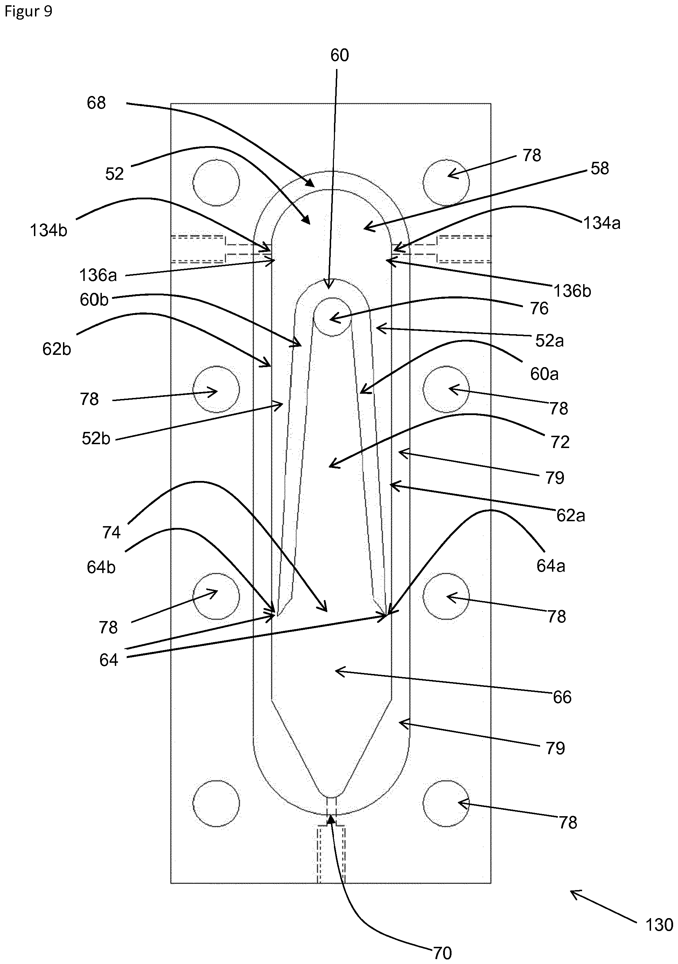

Figur 9 beschreibt einen erfindungsgemäßen Gas-Flüssig-Abscheider 130 in einer Längsschnittdarstellung. Der in Figur 9 dargestellte Gas-Flüssig-Abscheider 130 entspricht im konzeptionellen Aufbau dem in Figur 4 dargestellten Gas-Flüssig-Abscheider 50, wobei gleiche oder ähnliche Bauteile die gleichen Bezugszeichen aufweisen. Der Gas-Flüssig-Abscheider 130 umfasst einen Abscheidebereich 52 mit zwei Einlassdüsen 134a, 134b, zwei Pralleinheiten 136a, 136b und einer Gasleiteinheit 52.

Der wesentliche Unterschied besteht insbesondere darin, dass die zwei Einlassdüsen 134a, 134b das Aerosol auf die gegenüberliegende Seiten der jeweiligen Seitenwände 62a, 62b leiten, die an den jeweiligen Stellen als Pralleinheiten 136a, 136b ausgebildet sind, wobei der Strahl der Einlassdüsen 134a auf die Pralleinheit 136a gerichtet ist, die als Teil der Seitenwand 62b angesehen werden kann. Hierbei können die zwei Einlassdüsen 134a, 134b in horizontaler oder vertikaler Richtung leicht verschoben werden.

Die in den Figuren 5 bis 9 dargelegten Ausführungsformen können ebenso wie zuvor für Figur 4 dargelegt durch Fräsen aus einem Kunststoffblock hergestellt werden, wobei die Oberseite durch eine Platte, beispielsweise eine Glasplatte bereitgestellt werden kann, die von oben gegen den ausgefrästen Kunststoffblock gepresst wird. Ferner können sämtliche Ausführungsformen entsprechend durch Guss oder ähnliche Verfahren bereitgestellt werden.

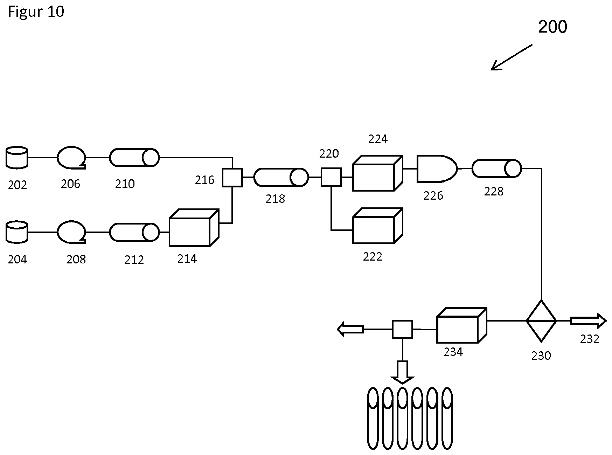

Figur 10 zeigt in schematischer Darstellung ein Chromatographiesystem 200 mit einem erfindungsgemäßen Gas-Flüssig-Abscheider 230, welche für eine überkritische Flüssigkeitschromatographie geeignet ist.

Ein solches System wird beispielhaft unter Verwendung von überkritischem CO₂ beschrieben, wobei Methanol als exemplarisches Lösungsmittel dargestellt wird. Selbstverständlich sind Systeme in denen andere Lösungsmittel, vorzugsweise organische Lösungsmittel eingesetzt werden, oder andere überkritische Fluide verwendet werden, ähnlich aufgebaut.

Wie in Fig. 10 gezeigt ist, werden die jeweiligen Fluide in Vorratsbehältern vorgehalten, insbesondere das weiterhin in einem überkritischen Zustand eingesetzte Gas in einem Speichertank 202 und das Lösungsmittel einem Speichertank 204 bereitgestellt, welche über jeweils über eine Pumpe 206, 208 gefördert aus den Speichertanks 202, 204 zu den weiteren Bestandteilen der Anlage werden können. In dem vorliegend beschriebenen System 200 ist vorzugsweise in jeder Fluidzuleitung eine Vorbereitungsstufe 210, 212 vorgesehen, über die die Flüssigkeiten temperiert werden können. Ferner kann eine Nivellierung der durch die Pumpen indizierten Druckschwankungen bereitgestellt werden. Demgemäß kann diese Vorbereitungsstufe beispielsweise als Wärmetauscher oder als Pumpe ausgebildet sein. In der Lösungsmittelleitung kann bevorzugt eine Zugabeeinheit 214 vorgesehen sein, beispielsweise ein Injektor, über den eine aufzutrennende Mischung in das System 200 eingeleitet werden, bevor das CO₂ und das Lösungsmittel in einen Mischer 216 geleitet und von diesem einer Chromatographiesäule 218 zugeführt werden.

In dem vorliegenden System 200 sind der Chromatographiesäule 218 zwei Analyseeinheiten nachgeschaltet, wobei hierzu eine Probeausleiteinheit 220 mit einem Massenspektrometer 222 verbunden ist und nach der Probeausleiteinheit ein UV-Detektor 224 vorgesehen ist. Der in der Leitung vorgesehene Rückdruckregler 226 hält den jeweiligen Druck aufrecht, der notwendig ist, dass das Fluid in einem überkritischen Zustand verbleibt. Nach dem Rückdruckregler 226 ist ein Wärmetauscher 228 vorgesehen, der ein Einfrieren des Aerosols beim Entspannungsvorgang verhindert. Nachfolgend wird das Aerosol in einen erfindungsgemäßen Gas-Flüssig-Abscheider 230 eingeleitet, wobei das Gas der Anlage über Auslass 232 abgeleitet wird.

Die Flüssigkeit wird in einen Fraktionssammler 234 eingeleitet und in diesem fraktioniert. Das in den fraktionierten Proben enthaltene Lösungsmittel kann aus den Proben entfernt werden.

## Patentansprüche

1. Gas-Flüssig-Abscheider (10, 50, 80, 90, 100, 130, 230) für eine Chromatographie-Anlage (200), umfassend:
a) einen Abscheidebereich (12, 52) mit einer Einlassdüse (14, 54, 94a, 94b, 102, 134a, 134b), einer Pralleinheit (16, 56, 136a, 136b) und einer Gasleiteinheit (18, 58, 82);
b) einen Trennbereich (26, 66) mit einem Flüssigauslass (28, 70) und
c) einen Gasausleitbereich (30, 72) mit einem Gasauslass (35, 76);
wobei der Abscheidebereich (12, 52) mit dem Trennbereich (26, 66) über eine Abscheideöffnung (22, 64) verbunden ist und der Abstand der Einlassdüse (14, 54, 94a, 94b, 102, 134a, 134b) von der Pralleinheit (16, 56, 136a, 136b) größer ist als die kleinste Längenausdehnung der Abscheideöffnung (22, 64, 64a, 64b) und die Einlassdüse (14, 54, 94a, 94b, 102, 134a, 134b) so ausgestaltet ist, dass ein durch die Einlassdüse (14, 54, 94a, 94b, 102, 134a, 134b) geleiteter Gas-Flüssigstrom gegen die Pralleinheit (16, 56, 136a, 136b) beaufschlagbar ist, **dadurch gekennzeichnet, dass** der Gas-Flüssig-Abscheider (10, 50, 80, 90, 100, 130, 230) mit einer Strömungsrichtung des Gases im Abscheidebereich (12, 52) betreibbar ist, die im Wesentlichen parallel zur Strömungsrichtung der Flüssigkeit ist, wobei der Abscheidebereich (12, 52) keine kreisförmige Querschnittsfläche im Bereich der Einlassdüse aufweist.

2. Gas-Flüssig-Abscheider gemäß Anspruch 1, **dadurch gekennzeichnet, dass** der Abscheidebereich (12, 52) mindestens drei Seitenwände umfasst, die zusammen mit einem oberen Abschluss einen Raum definieren, der über die Abscheideöffnung (22, 64) mit dem Trennbereich (26, 66) verbunden ist.

3. Gas-Flüssig-Abscheider gemäß Anspruch 1 oder 2, **dadurch gekennzeichnet, dass** die Abscheideöffnung (22, 64) so ausgestaltet ist, dass die Strömungsgeschwindigkeit des Gases im Trennbereich (26, 66) vermindert wird.

4. Gas-Flüssig-Abscheider gemäß Anspruch 3, **dadurch gekennzeichnet, dass** die Abscheideöffnung (64) zwei, drei, vier oder mehr Teilabscheideöffnungen (64a, 64b) aufweist, durch deren Anordnung eine Absenkung der Strömungsgeschwindigkeit des Gases bewirkbar ist.

5. Gas-Flüssig-Abscheider gemäß mindestens einem der vorhergehenden Ansprüche, **dadurch gekennzeichnet, dass** der Gas-Flüssig-Abscheider (10, 50, 80, 90, 100, 130, 230) Einbauten im Trennbereich (26, 66) zur Verringerung der Gasströmung aufweist.

6. Gas-Flüssig-Abscheider gemäß mindestens einem der vorhergehenden Ansprüche, **dadurch gekennzeichnet, dass** die Pralleinheit (16, 56, 136a, 136b) im Wesentlichen eben ist und als Prallplatte angesehen werden kann, wobei diese Prallplatte vorzugsweise eine Wand des Abscheidebereichs (12, 52) bildet und eine Seitenwand der Gasleiteinheit (18, 58) darstellt.

7. Gas-Flüssig-Abscheider gemäß mindestens einem der vorhergehenden Ansprüche, **dadurch gekennzeichnet, dass** im Abscheidebereich (12, 52) eine Umleiteinheit (104) vorgesehen ist, über die der Aerosolstrom auf eine zweite Pralleinheit beaufschlagbar ist.

8. Gas-Flüssig-Abscheider gemäß mindestens einem der vorhergehenden Ansprüche, **dadurch gekennzeichnet, dass** die Pralleinheit (16, 56, 136a, 136b) einen Oberflächenbereich mit einer Oberflächenenergie im Bereich von 15 bis 120 mN/m, besonders bevorzugt im Bereich von 20 bis 80 mN/m und speziell bevorzugt im Bereich von 22 bis 60 mN/m aufweist, wobei vorzugsweise mindestens 80 %, besonders bevorzugt mindestens 90 % der Oberfläche der Pralleinheit eine Oberflächenenergie im Bereich von 20 bis 80 mN/m, speziell bevorzugt im Bereich von 22 bis 60 mN/m aufweist.

9. Gas-Flüssig-Abscheider gemäß mindestens einem der vorhergehenden Ansprüche, **dadurch gekennzeichnet, dass** das Verhältnis der Eintrittsfläche der im Abscheidebereich (12, 52) vorgesehenen Einlassdüse (14, 54, 94a, 94b, 102, 134a, 134b) zum Volumen des Abscheidebereichs im Bereich von 4:1 mm²/ml bis 1:50 mm²/ml, bevorzugt im Bereich von 1:1 mm²/ml bis 1:20 mm²/ml und speziell bevorzugt im Bereich von 2:3 mm²/ml bis 1:5 mm²/ml liegt.

10. Gas-Flüssig-Abscheider gemäß mindestens einem der vorhergehenden Ansprüche, **dadurch gekennzeichnet, dass** der Abscheidebereich (12, 52) mindestens zwei, vorzugsweise mindestens drei Seitenwände (32, 36, 38, 62a, 62b) umfasst, die zusammen mit einem oberen Abschluss und einer Gasbeschleunigungseinheit (60, 84, 110), einen Raum definieren, der die Gasleiteinheit (18, 58, 82) bildet, wobei eine der Seitenwände (32, 36, 38, 62a, 62b), die Gasbeschleunigungseinheit (60, 84, 110) oder der obere Abschluss als Pralleinheit ausgebildet ist, wobei dieser Raum über die Abscheideöffnung mit dem Trennbereich (26, 66) verbunden ist, wobei der Abstand zwischen zwei gegenüberliegenden Seitenwände (32, 36, 38, 62a, 62b) größer ist als der halbe Abstand der Einlassdüse (14, 54, 94a, 94b, 102, 134a, 134b) von der Pralleinheit (16, 56, 136a, 136b).

11. Gas-Flüssig-Abscheider gemäß mindestens einem der vorhergehenden Ansprüche, **dadurch gekennzeichnet, dass** das Verhältnis der Austrittsfläche der Abscheideöffnung (22, 64) zum Volumen des Gas-Flüssig- Abscheiders (10, 50, 80, 90, 100, 130, 230) im Bereich von 0,05 mm²/ml bis 6 mm²/ml, besonders bevorzugt im Bereich von 0,3 mm²/ml bis 3 mm²/ml und speziell bevorzugt im Bereich von 0,5 mm²/ml bis 2,0 mm²/ml liegt.

12. Gas-Flüssig-Abscheider gemäß mindestens einem der vorhergehenden Ansprüche, **dadurch gekennzeichnet, dass** die Einlassdüse (14, 54, 94a, 94b, 102, 134a, 134b) so ausgestaltet ist, dass ein durch den Einlass geleiteter Gas-Flüssigstrom gegen die Pralleinheit beaufschlagbar ist und der Winkel mit dem ein durch der Einlassdüse geleiteter Gas-Flüssigstrom auf die Pralleinheit (16, 56, 136a, 136b) beaufschlagbar ist, vorzugsweise im Bereich von 50 bis 130 °, besonders bevorzugt im Bereich von 70 bis 110° liegt.

13. Chromatographie-Anlage (200) umfassend mindestens einen Gas-Flüssig-Abscheider (10, 50, 80, 90, 100, 130, 230) gemäß mindestens einem der Ansprüche 1 bis 12.

14. Verfahren zur Trennung eines Gas-Flüssiggemisches, **gekennzeichnet durch** die Verwendung eines Gas-Flüssig-Abscheiders (10, 50, 80, 90, 100, 130, 230) gemäß mindestens einem der Ansprüche 1 bis 12 oder einer Chromatographie-Anlage (200) gemäß Anspruch 13.

## Claims

1. A gas-liquid separator (10, 50, 80, 90, 100, 130, 230) for a chromatography system (200) comprising:
a) a separating region (12, 52) having an inlet nozzle (14, 54, 94a, 94b, 102, 134a, 134b), a baffle unit (16, 56, 136a, 136b) and a gas distribution unit (18, 58, 82);
b) a dividing region (26, 66) having a liquid outlet (28, 70) and
c) a gas discharge region (30, 72) having a gas outlet (35, 76);
wherein the separating region (12, 52) is connected to the dividing region (26, 66) by a separating opening (22, 64) and the distance of the inlet nozzle (14, 54, 94a, 94b, 102, 134a, 134b) from the baffle unit (16, 56, 136a, 136b) is greater than the smallest longitudinal extension of the separating opening (22, 64, 64a, 64b) and the inlet nozzle (14, 54, 94a, 94b, 102, 134a, 134b) is configured such that a gas-liquid stream directed through the inlet nozzle (14, 54, 94a, 94b, 102, 134a, 134b) can act on the baffle unit (16, 56, 136a, 136b) **characterized in that** the gas-liquid separator (10, 50, 80, 90, 100, 130, 230) is operable with a stream direction of the gas in the separating region (12, 52) which is substantially parallel to the stream direction of the liquid, wherein the separating region (12, 52) does not have a circular cross-sectional area in the region of the inlet nozzle.

2. The gas-liquid separator according to Claim 1, **characterized in that** the separating region (12, 52) comprising at least three side walls which, together with an upper end, define a space which is connected to the dividing region (26, 66) by the separating opening (22, 64).

3. The gas-liquid separator according to Claim 1 or 2, **characterized in that** the separating opening ((22, 64) is configured such that the stream velocity of the gas in the dividing region (26, 66) is reduced.

4. The gas-liquid separator according to Claim 3, **characterized in that** the separating opening (64) has two, three, four or more partial separating openings (64a, 64b), by the arrangement of which a reduction in the stream velocity of the gas is effectible.

5. The gas-liquid separator according to at least one of the preceding claims, **characterized in that** the gas-liquid separator (10, 50, 80, 90, 100, 130, 230) has installations in the dividing region (26, 66) for reducing the gas stream.

6. The gas-liquid separator according to at least one of the preceding claims, **characterized in that** the baffle unit(16, 56, 136a, 136b) is substantially flat and can be regarded as a baffle plate, said baffle plate preferably forming a wall of the separating region(12, 52) and constituting a side wall of the gas distribution unit (18, 58).

7. The gas-liquid separator according to at least one of the preceding claims, **characterized in that** a diverting unit (104) is provided in the separating region (12, 52), by which the aerosol stream can act on a second baffle unit.

8. The gas-liquid separator according to at least one of the preceding claims, **characterized in that** the baffle unit (16, 56, 136a, 136b) has a surface region with a surface energy in the range from 15 to 120 mN/m, particularly preferably in the range from 20 to 80 mN/m and especially preferably in the range from 22 to 60 mN/m, wherein preferably at least 80%, particularly preferably at least 90%, of the surface of the baffle unit has a surface energy in the range from 20 to 80 mN/m, especially preferably in the range from 22 to 60 mN/m.

9. The gas-liquid separator according to at least one of the preceding claims, **characterized in that** the ratio of the entry surface of the inlet nozzle (14, 54, 94a, 94b, 102, 134a, 134b) provided in the separating region (12, 52) to the volume of the separating region is in the range from 4:1 mm²/ml to 1:50 mm²/ml, preferably in the range from 1:1 mm²/ml to 1:20 mm²/ml and especially preferably in the range from 2:3 mm²/ml to 1:5 mm²/ml.

10. The gas-liquid separator according to at least one of the preceding claims, **characterized in that** the separating region (12, 52) comprises at least two, preferably at least three, side walls (32, 36, 38, 62a, 62b) defining, together with an upper end and a gas acceleration unit (60, 84, 110), a space forming the gas distribution unit (18, 58, 82), wherein one of the side walls (32, 36, 38, 62a, 62b), the gas acceleration unit (60, 84, 110) or the upper end is formed as a baffle unit, wherein said space is connected to the dividing region (26, 66) by the separating opening, wherein the distance between two opposite side walls (32, 36, 38, 62a, 62b) is greater than half the distance of the inlet nozzle (14, 54, 94a, 94b, 102, 134a, 134b) from the baffle unit (16, 56, 136a, 136b).

11. The gas-liquid separator according to at least one of the preceding claims, **characterized in that** the ratio of the outlet surface of the separating opening (22, 64) to the volume of the gas-liquid separator (10, 50, 80, 90, 100, 130, 230) is in the range from 0.05 mm²/ml to 6 mm²/ml, particularly preferably in the range from 0.3 mm²/ml to 3 mm²/ml and especially preferably in the range from 0.5 mm²/ml to 2.0 mm²/ml.

12. The gas-liquid separator according to at least one of the preceding claims, **characterized in that** the inlet nozzle (14, 54, 94a, 94b, 102, 134a, 134b) is configured such that a gas-liquid stream directed through the inlet can act on the baffle unit (16, 56, 136a, 136b) and the angle at which a gas-liquid stream directed through the inlet nozzle can act on the baffle unit is preferably in the range from 50 to 130°, particularly preferably in the range from 70 to 110°.

13. A chromatography system (200) comprising at least one gas-liquid separator (10, 50, 80, 90, 100, 130, 230) according to at least one of Claims 1 to 12.

14. A method of separating a gas-liquid mixture **characterized by** using a gas-liquid separator (10, 50, 80, 90, 100, 130, 230) according to at least one of Claims 1 to 12 or a chromatography system (200) according to Claim 13.

## Revendications

1. Séparateur gaz-liquide (10, 50, 80, 90, 100, 130, 230) destiné à une installation de chromatographie (200) comprenant :
a) une zone de séparation (12, 52) avec une buse d'entrée (14, 54, 94a, 94b, 102, 134a, 134b), une unité d'impact (16, 56, 136a, 136b) et une unité de guidage de gaz (18, 58, 82) ;
b) une zone de dissociation (26, 66) avec une sortie pour le liquide (28, 70) et
c) une zone de sortie de gaz (30, 72) avec une sortie de gaz (35, 76) ;
dans lequel la zone de séparation (12, 52) est reliée avec la zone de dissociation (26, 66) par le biais d'un orifice de séparation (22, 64) et la distance de la buse d'entrée (14, 54, 94a, 94b, 102, 134a, 134b) jusqu'à l'unité d'impact (16, 56, 136a, 136b) est supérieure à la plus petite extension en longueur de l'orifice de séparation (22, 64, 64a, 64b) et la buse d'entrée (14, 54, 94a, 94b, 102, 134a, 134b) est conçue de telle manière qu'un flux gaz-liquide guidé à travers la buse d'entrée (14, 54, 94a, 94b, 102, 134a, 134b) peut tomber contre l'unité d'impact (16, 56, 136a, 136b), **caractérisé en ce que** le séparateur gaz-liquide (10, 50, 80, 90, 100, 130, 230) peut être mis en route avec un sens d'écoulement du gaz dans la zone de séparation (12, 52) qui est essentiellement parallèle au sens d'écoulement du liquide, où la zone de séparation (12, 52) ne présente aucune surface de section transversale de forme circulaire dans la zone de la buse d'entrée.

2. Séparateur gaz-liquide selon la revendication 1, **caractérisé en ce que** la zone de séparation (12, 52) comprend au moins trois parois latérales qui définissent ensemble avec une fermeture supérieure une chambre qui est reliée avec la zone de dissociation (26, 66) par le biais de l'orifice de séparation (22, 64).

3. Séparateur gaz-liquide selon la revendication 1 ou la revendication 2, **caractérisé en ce que** l'orifice de séparation (22, 64) est conçu de telle manière que la vitesse d'écoulement du gaz est réduite dans la zone de dissociation (26, 66).

4. Séparateur gaz-liquide selon la revendication 3, **caractérisé en ce que** l'orifice de séparation (64) présente deux, trois, quatre ou plus orifices de séparation partiels (64a, 64b) par l'agencement desquels on peut provoquer une diminution de la vitesse d'écoulement du gaz.

5. Séparateur gaz-liquide selon au moins l'une des revendications précédentes, **caractérisé en ce que** le séparateur gaz-liquide (10, 50, 80, 90, 100, 130, 230) présente des chicanes dans la zone de dissociation (26, 66) permettant la diminution de l'écoulement du gaz.

6. Séparateur gaz-liquide selon au moins l'une des revendications précédentes, **caractérisé en ce que** l'unité d'impact (16, 56, 136a, 136b) est essentiellement plane et peut être considérée comme une plaque d'impact, où cette plaque d'impact forme de préférence une paroi de la zone de séparation (12, 52) et représente une paroi latérale de l'unité de guidage du gaz (18, 58).

7. Séparateur gaz-liquide selon au moins l'une des revendications précédentes, **caractérisé en ce qu'**une unité de dérivation (104) est prévue dans la zone de séparation (12, 52) par laquelle l'écoulement de l'aérosol peut être mis en œuvre sur une deuxième unité d'impact.

8. Séparateur gaz-liquide selon au moins l'une des revendications précédentes, **caractérisé en ce que** l'unité d'impact (16, 56, 136a, 136b) présente une zone de surface avec une énergie de surface dans la plage de 15 à 120 mN/m, de manière particulièrement préférée dans la plage de 20 à 80 mN/m et idéalement dans la plage de 22 à 60 mN/m, où, de préférence, au moins 80 %, de manière particulièrement préférée, au moins 90 %, de la surface de l'unité d'impact présentent une énergie de surface dans la plage de 20 à 80 mN/m, idéalement dans la plage de 22 à 60 mN/m.

9. Séparateur gaz-liquide selon au moins l'une des revendications précédentes, **caractérisé en ce que** le rapport entre la surface d'entrée de la buse d'entrée (14, 54, 94a, 94b, 102, 134a, 134b) prévue dans la zone de séparation (12, 52) et le volume de la zone de séparation se situe dans la plage de 4 : 1 mm²/ml à 1 : 50 mm²/ml, de préférence, dans la plage de 1 : 1mm²/ml à 1 : 20 mm²/ml et idéalement dans la plage de 2 : 3 mm²/ml à 1 : 5 mm²/ml.

10. Séparateur gaz-liquide selon au moins l'une des revendications précédentes, **caractérisé en ce que** la zone de séparation (12, 52) comprend au moins deux, de préférence au moins trois parois latérales (32, 36, 38, 62a, 62b) qui définissent ensemble, avec une fermeture supérieure et une unité d'accélération de gaz (60, 84, 110), une chambre qui forme l'unité de guidage du gaz (18, 58, 82), où une des parois latérales (32, 36, 38, 62a, 62b), l'unité d'accélération du gaz (60, 84, 110) ou la fermeture supérieure est conçue en tant qu'unité d'impact, où cette chambre est reliée avec la zone de dissociation (26, 66) par le biais de l'orifice de séparation, où la distance entre deux parois latérales (32, 36, 38, 62a, 62b) situées l'une en face de l'autre est supérieure à la moitié de la distance entre la buse d'entrée (14, 54, 94a, 102, 134a, 134b) et l'unité d'impact (16, 56, 136a, 136b).

11. Séparateur gaz-liquide selon au moins l'une des revendications précédentes, **caractérisé en ce que** le rapport entre la surface de sortie de l'orifice de séparation (22, 64) et le volume du séparateur gaz-liquide (10, 50, 80, 90, 100, 130, 230) se situe dans la plage de 0,05 mm²/ml à 6 mm²/ml, de manière particulièrement préférée dans la plage de 0,3 mm²/ml à 3 mm²/ml et idéalement dans la plage de 0,5 mm²/ml à 2 mm²/ml.

12. Séparateur gaz-liquide selon au moins l'une des revendications précédentes, **caractérisé en ce que** la buse d'entrée (14, 54, 94a, 94b, 102, 134a, 134b) est conçue de telle manière qu'un écoulement gaz-liquide guidé à travers l'entrée peut être appliqué contre l'unité d'impact et l'angle avec lequel un écoulement gaz-liquide guidé à travers la buse d'entrée sur l'unité d'impact (16, 56, 136a, 136b) se situe de préférence dans la plage de 50 à 130 °, de manière particulièrement préférée dans la plage de 70 à 110 °.

13. Installation de chromatographie (200) comprenant au moins un séparateur gaz-liquide (10, 50, 80, 90, 100, 130, 230) selon au moins l'une des revendications 1 à 12.

14. Procédé de dissociation d'un mélange gaz-liquide, **caractérisé par** l'utilisation d'un séparateur gaz-liquide (10, 50, 80, 90, 100, 130, 230) selon au moins l'une des revendications 1 à 12 ou d'une installation de chromatographie (200) selon la revendication 13.
